# EUROPEAN PATENT SPECIFICATION

(11) **EP 0 551 253 B1**
(45) Date of publication and mention of the grant of the patent: **29.07.1998**
(21) Application number: 91902447.1
(22) Date of filing: 16.11.1990
(51) Int. Cl.: H04L 7/00

(54) **SYNCHRONOUS SELECTIVE SIGNALLING SYSTEM**
Synchrones und selektives Signalisierungssystem
SYSTEME DE SIGNALISATION SYNCHRONE SELECTIF

(30) Priority: 26.12.1989 US 457126
(43) Date of publication of application: 21.07.1993
(73) Proprietor: MOTOROLA, INC., Schaumburg, IL 60196 (US)
(72) Inventor: DELUCA, Michael, J., Boca Raton, FL 33486 (US); MOORE, Morris, A., Wellington, FL 33414 (US); WILLARD, David, F., Plantation, FL 33313 (US)
(74) Representative: Dunlop, Hugh Christopher
(86) International application number: US9006581
(87) International publication number: WO9110304

(56) References cited:
- US-A- 4 663 623
- US-A- 4 713 808
- US-A- 4 812 813

## Description

### Summary of the Invention

This invention relates in general to the area of selective call signalling systems. More particularly the invention relates to a synchronous signalling system for use in paging as well as other applications.

### Background Discussion

Prior art paging systems have endeavored to efficiently communicate information to selective call receivers (pagers) while providing for effective battery saving operations of pagers. The widely accepted Golay Sequential Code (GSC) provides an asynchronous method for communicating message information to pagers and has been described in U.S. patents 4,424,514 and 4,427,980 both to Fennell et al. The GSC protocol provides a preamble signal which initially synchronizes pagers to the signal. One of several preamble signals may be used, each identifying a different group of pagers which are to decode the following message information. Additionally, U.S. patent 4,860,003 to DeLuca et al. describes power conservation during the reception of a signal, such as the GSC signal, in response to a signal indicating the occurrence of address information.

An asynchronous/synchronous signalling system has been defined by the Post Office Standardization Code Advisory Group (POCSAG) wherein once synchronized to the POCSAG signal, pagers synchronously decode the signal. The POCSAG signal and a method for decoding the signal is described in U.S. Patent 4,663,623 to Lax et al. Like GSC, a POCSAG transmission may begin asynchronously with respect to a prior POCSAG transmission, once it begins the signal is synchronously decoded until the transmission is ended. The POCSAG transmission has at least one batch, each batch beginning with a synchronization signal and having eight frames, each frame occurring at a predetermined time after the synchronization signal. A pager, synchronized to the signal, need only search for its address in a predetermined one of the eight frames and thus may conserve power for the remaining frames. However, a subsequent transmission of the POCSAG signal need not be either bit or frame synchronized to to the previous POCSAG transmission thereby rendering the asynchronous aspect of the signal. Thus, the POCSAG signal is synchronous only within each transmission.

Most paging protocol signals are designed to co-exist with other paging protocol signals. For example, a GSC transmission may be followed by a POCSAG transmission which may be followed by a 5-tone sequential transmission. It is desirable to provide for efficient battery saving for a pager in the absence of the protocol to be received by the pager. This has typically been accomplished with a preamble signal preceding the message transmission. Both the GSC and POCSAG signals begin with a long preamble signal providing for pager synchronization before the message transmission and providing for battery saving in the absence thereof. The preamble signal although providing for battery saving and synchronization, decreases the overall system message throughput. During the time taken for a preamble transmission, no message information is being communicated to the paging receivers, thereby decreasing throughput.

Synchronous paging signals which eliminate any preamble signal may provide more efficient battery savings. A synchronous paging signal is shown in U.S. patent 4,642,632 to Ohyagi et al. This synchronous signal has pagers divided into one of a plurality of group fields, each group field occurring at a predetermined period and having a predetermined maximum message information capacity. Since the synchronous signal is always being transmitted, no preamble signals are required, and a pager need only decode paging information while it's preassigned group is being transmitted. However, varying traffic demands (the amount of message information for a group of pagers) may cause the amount of message information for one group of pagers to exceed the maximum capacity of the group field while another group field has available capacity. Thus throughput is decreased by transmitting idle signals during one group field while another group field has message information exceeding its capacity.

Thus what is needed is a paging system which provides for battery saving improvements afforded by a synchronous paging signal. Additionally, it is desirable to provide a synchronous paging system which allows for reconfiguration of groups of pagers in order to accommodate message traffic variations. Furthermore, it is desirable to provide a synchronous paging system which is able to co-exist with other paging protocols.

### Summary of the Invention

It is therefore an object of the present invention to provide for the aforementioned needs and desires, and resolve, at least in part, the aforementioned problems.

In accordance with the present invention, a selective call receiver comprising a memory having a first mask stored therein indicative of a first period of reception for receiving a transmitted communication signal having a plurality of packets, CHARACTERIZED BY:
each packet having:
   an identification signal for identifying the packet,
   message information, and
   a control signal separate from and subsequent to the identification signal, wherein the identification signal and the control signal are representative of a second mask indicative of a second period of reception, said selective call receiver comprising:
means for receiving the control signal and the identification signal within the packet ;
comparing means for comparing the first mask and the second mask for establishing a correspondence therebetween; and
battery saving means responsive to the comparing means for temporarily changing the first period of reception to the second period of reception of said selective call receiver for receiving an at least one additional packet.

In accordance with a second aspect of the present invention, there is provided a method for receiving a transmitted communication signal comprising the steps of : using predetermined signals assigned to the selective call receiver representative of a first mask indicative of a first period of reception for receiving the transmitted communication signal having a plurality of packets, CHARACTERIZED BY:
each packet comprising:
   an identification signal for identifying the packet,
   message information, and
   a control signal separate from and subsequent to the identification signal, wherein the identification signal and the control signal are representative of a second mask indicative of a second period of reception for enabling the selective call receiver to receive at least one additional packet, said method further comprising the steps of:
receiving the control signal and the identification signal within the packet;
comparing the first mask with the second mask;
establishing in response to the comparing step a correspondence between the first mask and second mask; and
temporarily changing the first period of reception of said selective call receiver to the second period of reception for receiving an at least one additional packet.

In accordance with a further aspect of the present invention,there is provided a selective call receiver system comprising : transmitting means for transmitting a communication signal to a plurality of selective call receiver groups, said plurality of selective call receiver groups having a first mask stored within the selective call receivers indicative of a first period of reception for receiving the transmitted communication signal having a plurality of packets; CHARACTERIZED BY:
means for periodically generating packets, the packet having:
   an identification signal for identifying at least one of the plurality of groups of selective call receivers,
   message information, and
   a control signal separate from and subsequent to the identification signal, wherein the identification signal and the control signal are representative of a second mask indicative of a second period of reception for enabling the at least one of the plurality of the selective call receiver groups to receive an at least one additional packet;
means for accumulating a plurality of messages;
means for determining the occurrence of the at least one additional packet capable of having message information for the at least one group of selective call receivers;
means for generating the control signal with the second mask indicative of the second period of reception in response to said determination; and
means for incorporating the control signal within the packet to be transmitted to the at least one group of selective call receivers, said packet having an identification signal corresponding a predetermined identification signal assigned to the at least one of the group of selective call receivers.

### Brief Description of the Drawings

Figure 1 shows a synchronous signal in accordance with an embodiment of the present invention.

Figure 2 shows a battery operated paging receiver operating in accordance with the present invention.

Figure 3 shows a flowchart of the operation of the pager decoding a synchronous signal in accordance with the present invention.

Figure 4 shows a flowchart of a pager synchronously decoding in accordance with the present invention.

Figure 5 shows an example of a synchronous paging signal and the battery saver operation of the pager of Figure 2.

Figure 6 shows a table of the possible frames in which a pager having a predetermined ID operating in the signal of Figure 5 may decode signals.

Figure 7 shows a table of possible frames of the pager of Figure 6 wherein the pager has an alternate predetermined cycle value.

Figure 8 shows a block diagram of a paging terminal generating a paging signal in accordance with Figure 1.

Figure 9 shows a flowchart of the operation of the capacity analyzer and cycle generator of Figure 8.

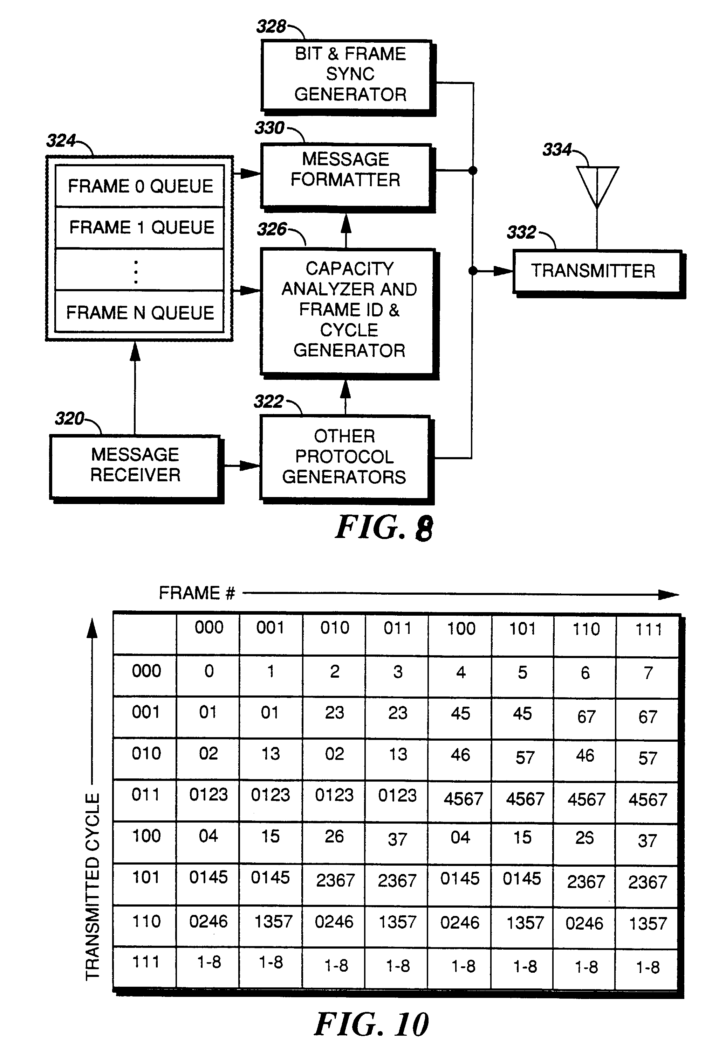

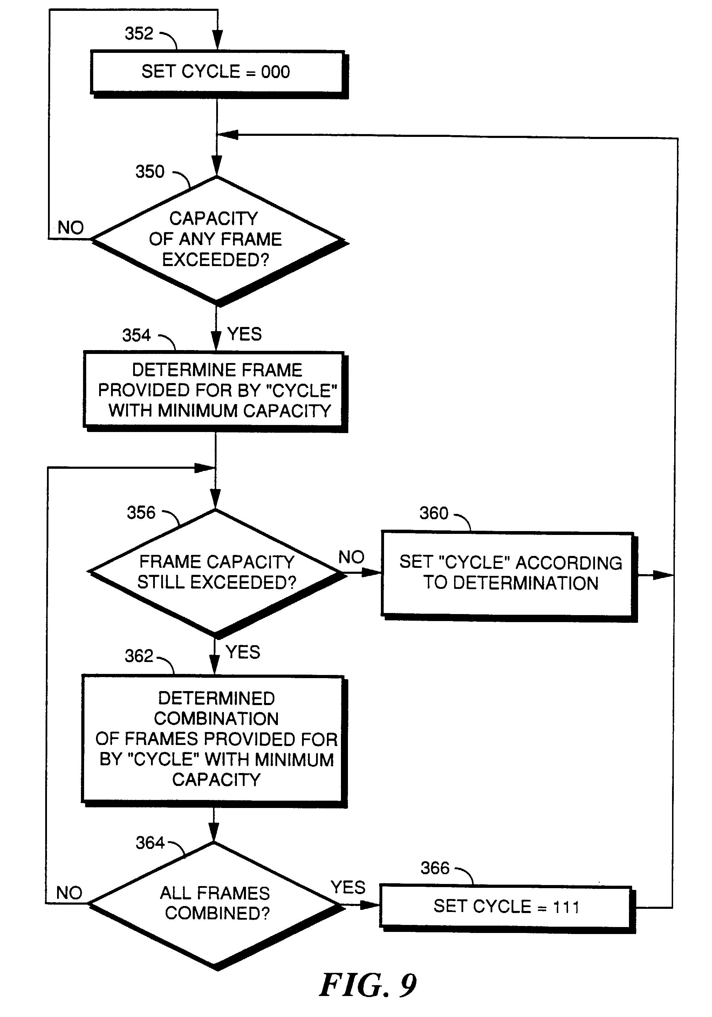

Figure 9 shows a flowchart of the operation of the capacity analyzer and cycle generator of Figure 8.

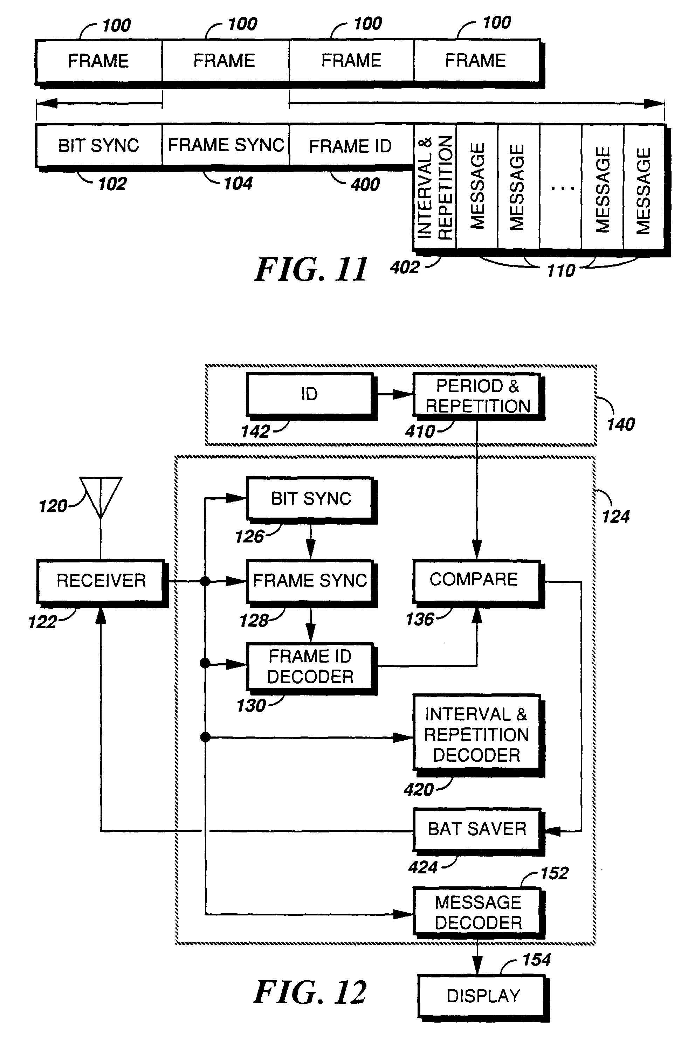

Figure 10 shows a table indicating frames in which pagers will decode in response to the cycle signal.

Figure 11 shows an alternate signal in accordance with the present invention.

Figure 12 shows a block diagram of the paging receiver which decodes the signal of Figure 11.

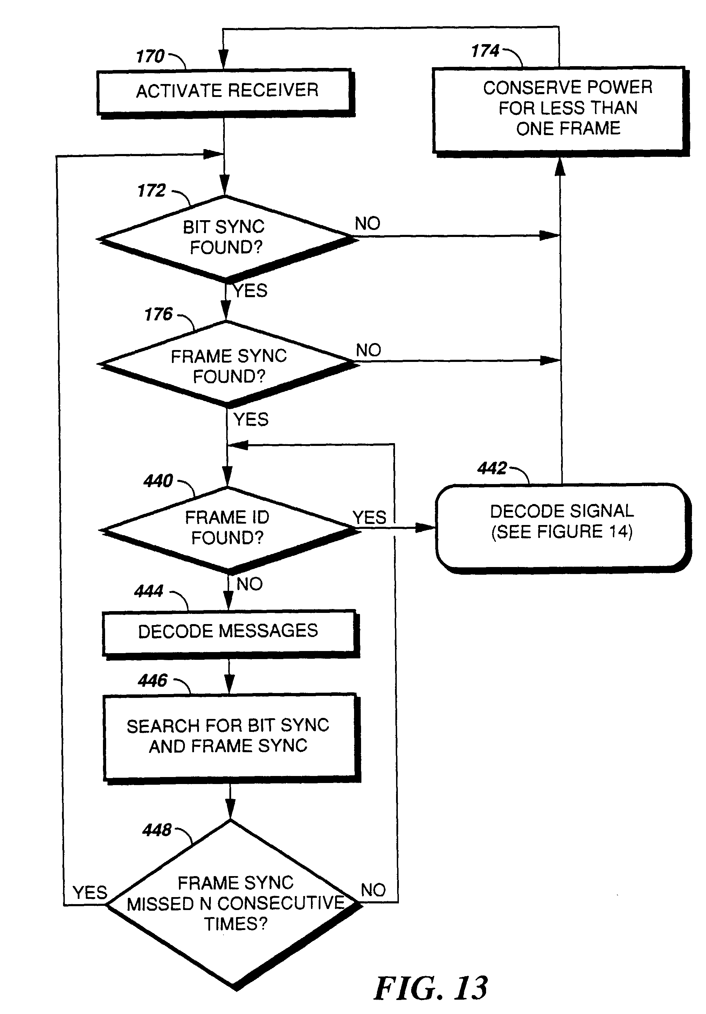

Figure 13 shows a flowchart of the operation of the receiver of Figure 12.

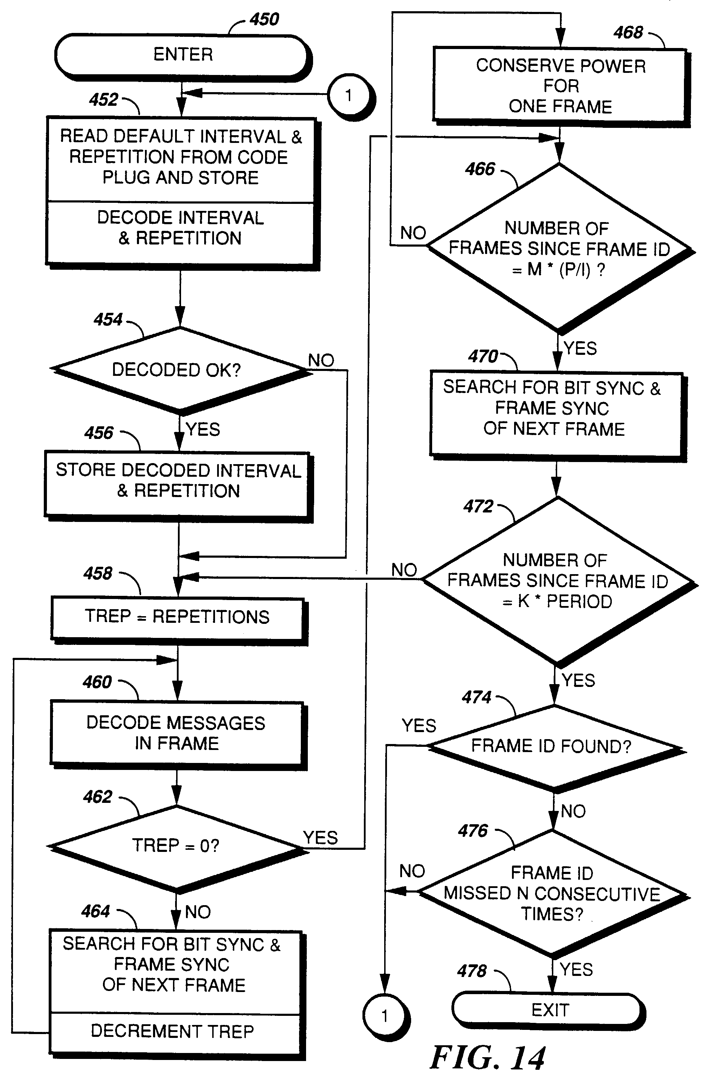

Figure 14 shows a flowchart of the synchronous operation of the receiver of Figure 12.

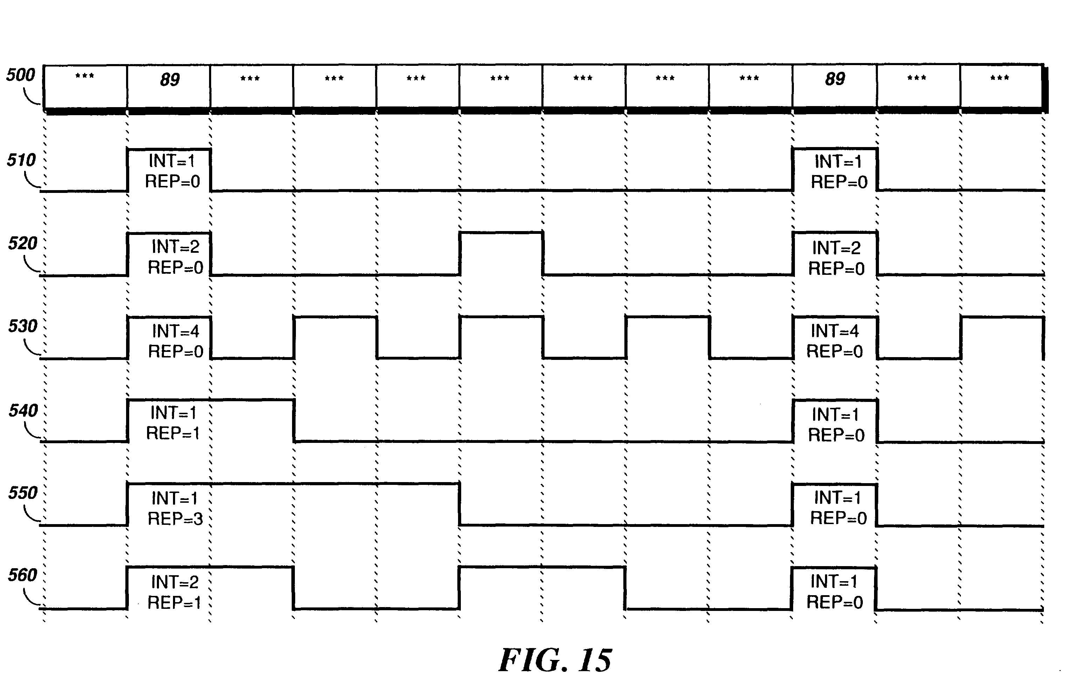

Figure 15 shows an example of a synchronous paging signal and the battery saver operation of the pager of Figure 12.

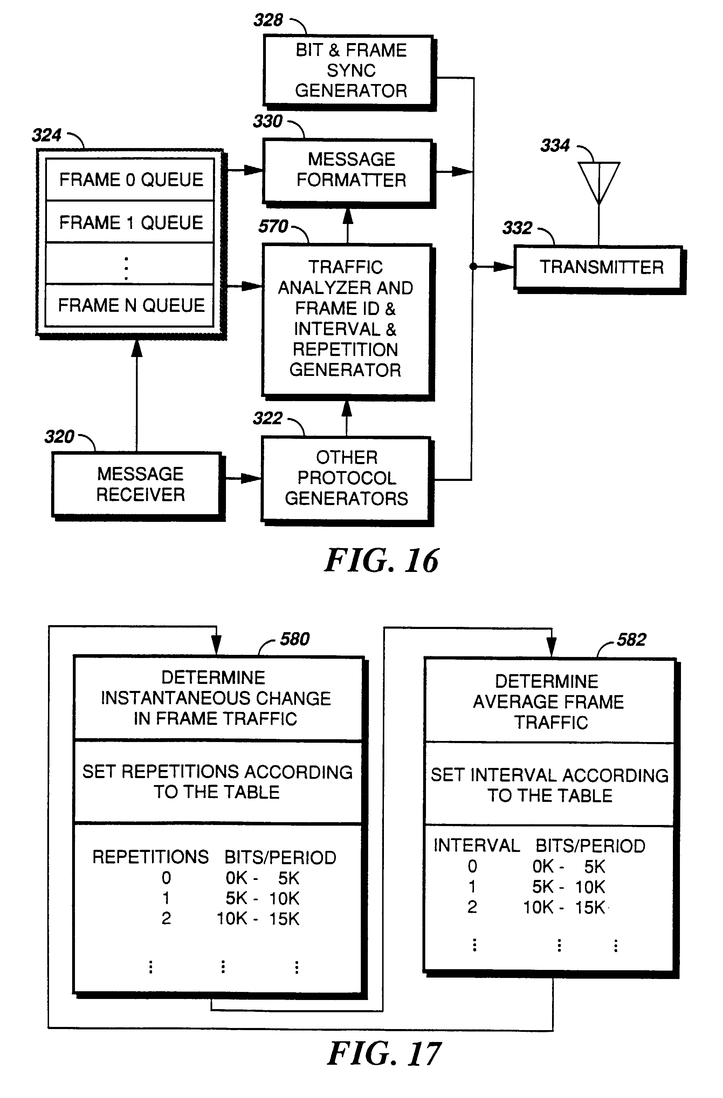

Figure 16 shows a block diagram of a paging terminal generating a paging signal in accordance with Figure 11.

Figure 17 shows the operation of the traffic analyzer and interval and repetition generator of Figure 16.

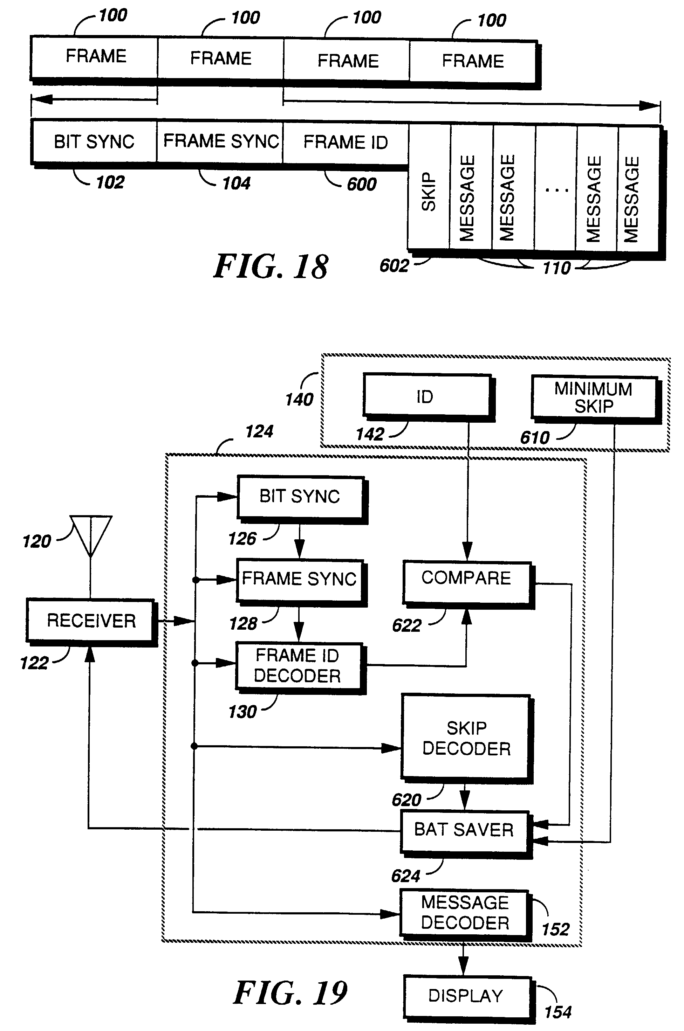

Figure 18 shows an alternate synchronous signal in accordance with the present invention.

Figure 19 shows a block diagram of the paging receiver which decodes the signal of Figure 18.

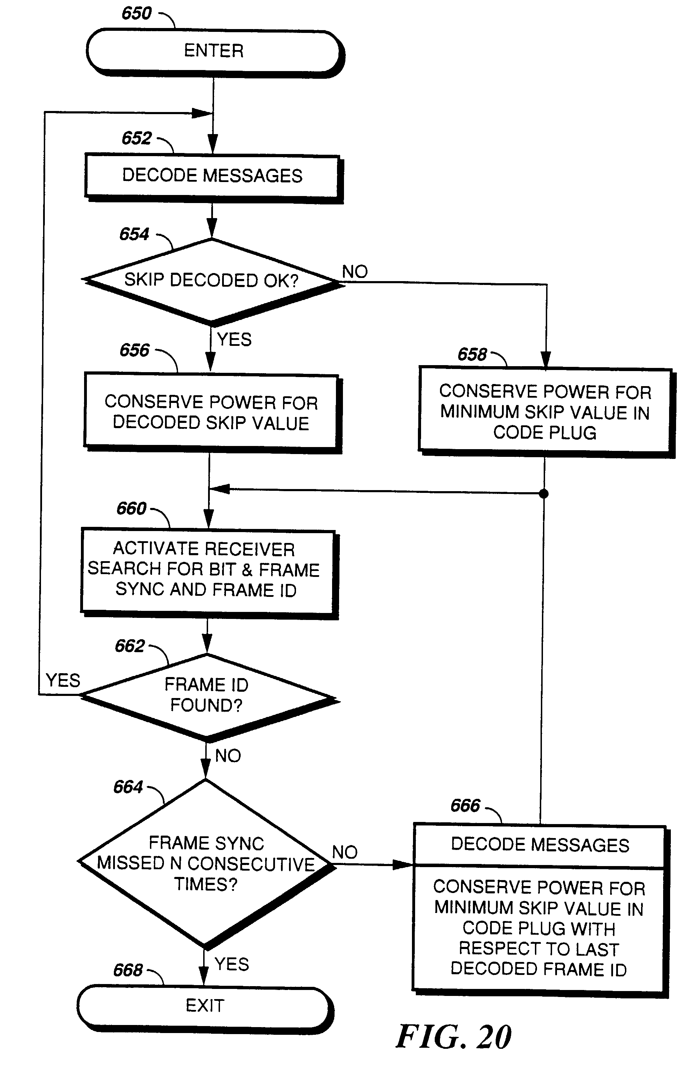

Figure 20 shows a flowchart of the synchronous operation of the receiver of Figure 19.

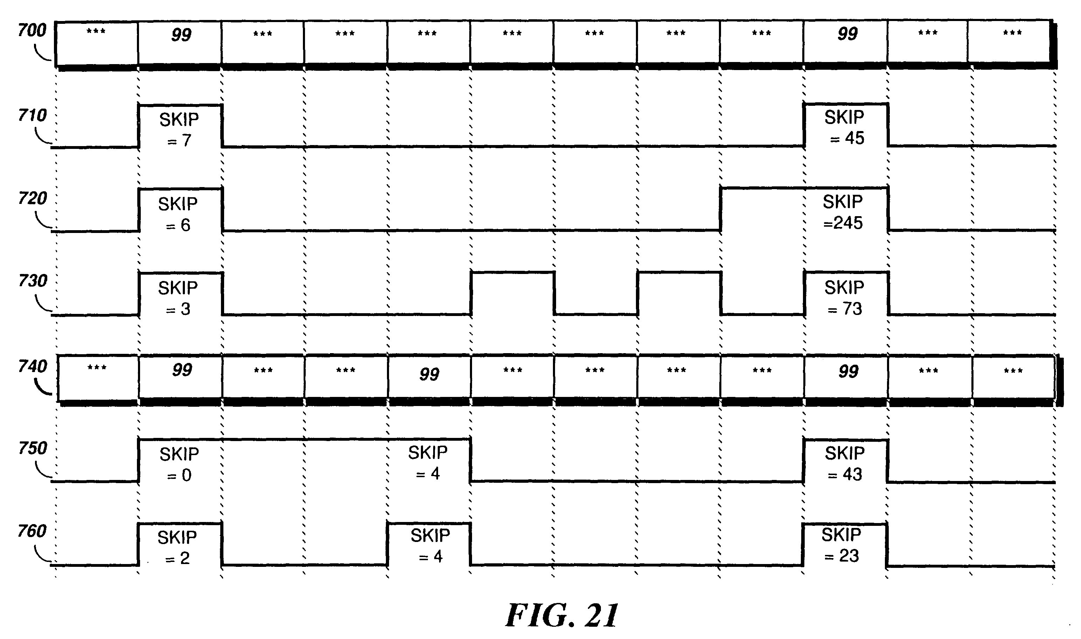

Figure 21 shows an example of a synchronous paging signal and the battery saver operation of the pager of Figure 19.

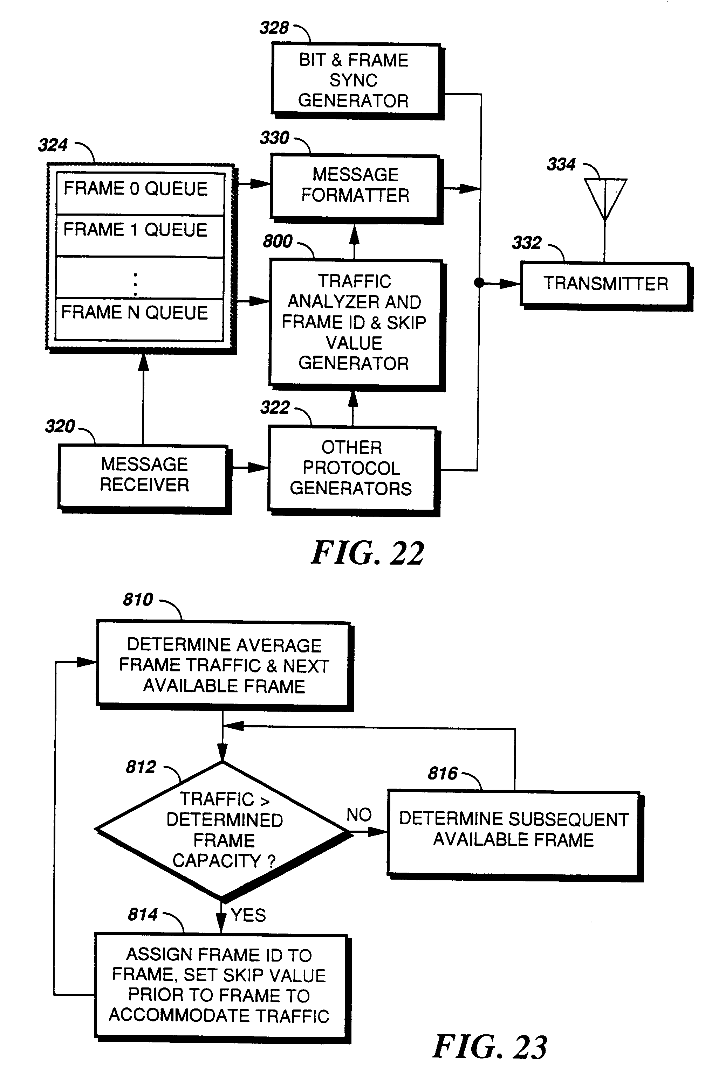

Figure 22 shows a block diagram of a paging terminal generating a paging signal in accordance with Figure 18.

Figure 23 shows a flowchart detailing the operation of the traffic analyzer and interval and repetition generator.

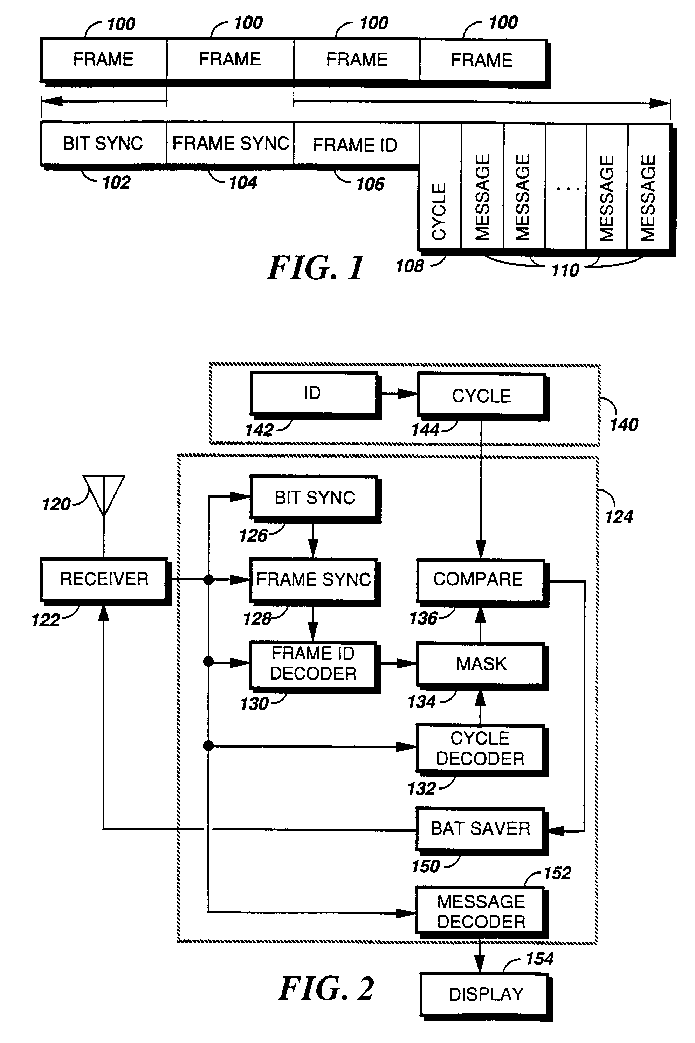

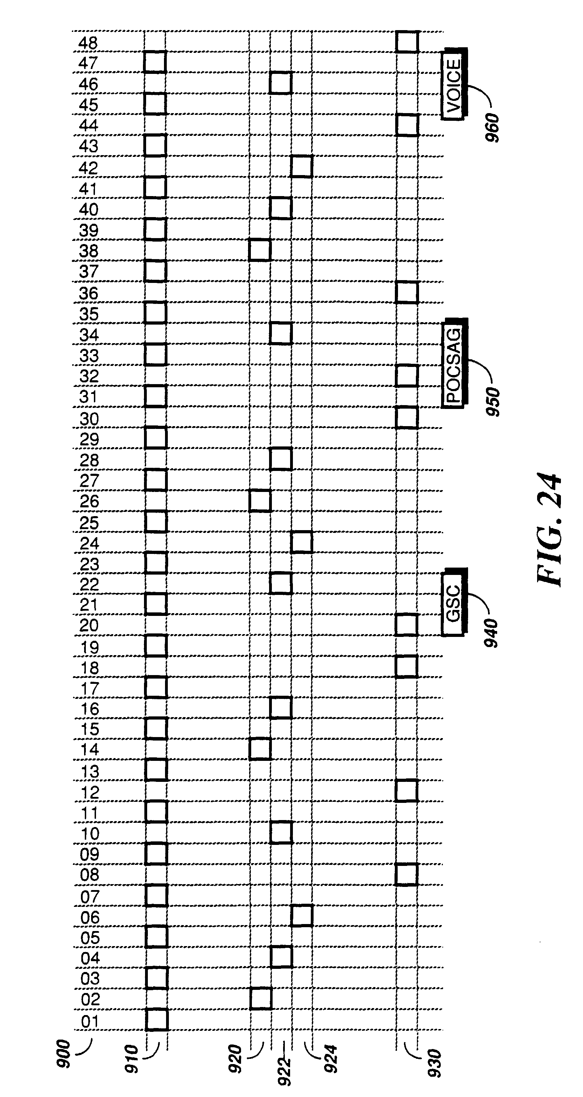

Figure 24 shows an example frame assignment the combined signals of Figures 1, 11 and 18 and signals of other paging protocols.

### Description of a Preferred Embodiment

Figure 1 shows a synchronous signal in accordance with an embodiment of the present invention. The signal consists of a number of message packets or frames 100. Each frame is substantially four seconds in duration and has a base data rate of 1200 bits per second. Each frame consists of a bit sync signal 102, preferably 32 bits of alternating 1,0 pattern, followed by a frame sync signal 104 preferably one of several predetermined thirty two bit words, and a frame ID signal 106, preferably one thirty two bit word having 21 variable information bits containing information such as the frame identification number. The bit sync signal provides for pager bit synchronization while the frame sync signal provides for frame synchronization and may include a signal indicative of the data rate of the message information following the frame ID signal. The frame ID signal indicates the number of the frame. Each frame is numbered in sequence from 0 to 63, thereby providing a signalling system having sixty four frames. Alternately any number of frames may be used in the system, however 2ⁿ frames (where n is an integer) are preferred.

Following frame ID 106 is a word 108 having a cycle value, a plurality of message words 110 follow thereafter. Words 108-110 are 31,21 BCH code words having 21 information bits and 10 parity bits generated according to a known BCH algorithm. An additional even parity bit extends the word to a 32,21 code word. Messages within words 110 comprise at least one message having an address signal and optional information signals associated with the address signal. Preferably, all of the address signals within the frame are located in a first portion and the information signals are located in a subsequent portion of the frame. U.S. patent 4,668,949 to Akahori et al. shows locating addresses in a first portion and message information in a second portion of a frame. Additionally, U.S. patent application 07/396,189 to DeLuca et al., assigned to the assignee of the present invention shows an improved method of locating addresses as in a first portion and message information in a subsequent portion of a signal. Word 108 includes the cycle value which indicates the frames in which a pager is to decode message information. In a paging system having 2ⁿ frames, the cycle value occupies n bits of word 108. The remaining bits may contain a boundary signal indicating a boundary between the address and information signals in words 110. Words 108-110 are shown in a vertical orientation to indicate that these words may be interleaved in order to improve the immunity of the transmission to burst errors. Preferably words 108-110 comprise 18 blocks of words wherein each blocks contains 8 interleaved words. In an alternate embodiment the interleaving may be modified or eliminated.

Figure 2 shows a battery operated paging receiver operating in accordance with the present invention. The radio frequency modulated signal of Figure 1 is received by antenna 120, demodulated by receiver 122 and processed by decoder 124. Decoder 124 may be comprised within a microcomputer executing a program causing the pager to process the signal. A preferred microcomputer is the MC68HC05C8 microcomputer manufactured by Motorola, and a pager having a microcomputer decoder is described in the aforementioned US Patent 4,860,003 to DeLuca et al. The decoder comprises a bit synchronizer 126 and a frame synchronizer 128 for synchronizing to signals 102 and 104 respectively providing bit and word boundary signals for use by remaining elements of the decoder. Frame ID decoder 130 and cycle decoder 132 decode signals 106 and 108 respectively. The decoded signal 106 and 108 are masked by masking function 134 and compared by comparator 136 with information contained within a code plug 140. Code plug 140 has a predetermined frame ID 142, a predetermined cycle value 144, and a predetermined address assigned to the pager, as well as other signals which configure the pager for desired operating characteristics. As will be shown, the predetermined cycle value 144 allows one pager to be assigned to a plurality of frames. The predetermined frame ID 142 is masked with cycle value 144 and is used by comparator 136 to enable battery saver 150. Battery saver 150 deactivates receiver 122 for certain frames thereby conserving battery power. When the paging receiver receives the information in words 108-110 message decoder 152 searches for an address signal matching a predetermined address signal assigned to the pager and further decodes information signals associated with the address. The message information may then be displayed on display 154.

In an alternate embodiment, cycle value 108 may contain a signal indicative of the cycle to be used. The pager may include a plurality of predetermined cycle values, one of which is selected in response to the signal indicative of the cycle to be used. The table below shows a relationship between the received signal and the cycle value.

| SIGNAL | CYCLE | SIGNAL | CYCLE |
|---|---|---|---|
| 000 | unused | 100 | 11 1000 |
| 001 | 00 0000 | 101 | 11 1100 |
| 010 | 10 0000 | 110 | 11 1110 |
| 011 | 11 0000 | 111 | 11 1111 |

In the table above, the system provides for 6 bits of a cycle value, thereby providing for 2⁶ or, 64 frame IDs. Transmitting a signal indicative of the cycle to be used provides for communication of the cycle value with less information bits, thereby increasing the amount of information bits available for other information which may be included in word 108.

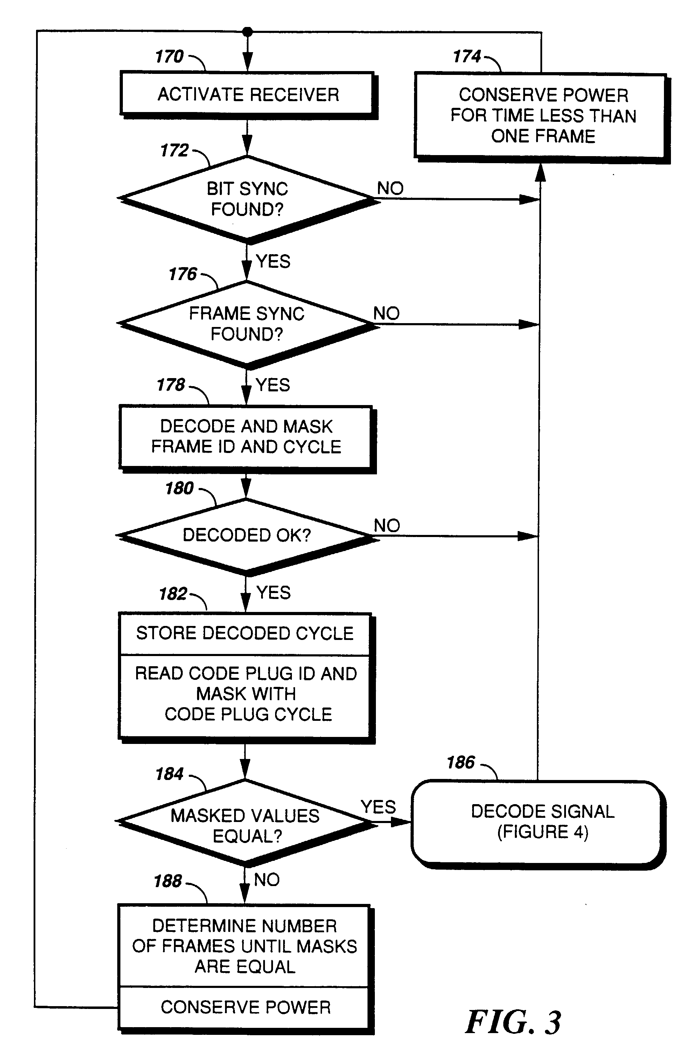

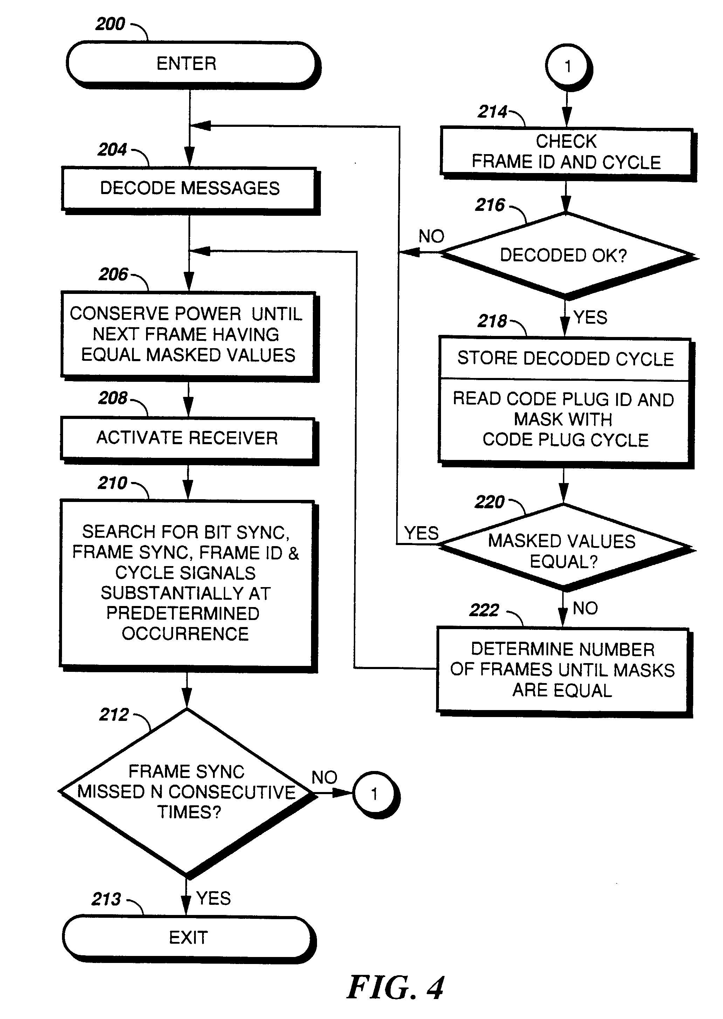

Figure 3 shows a flowchart of the operation of the pager decoding a synchronous signal in accordance with the present invention. It is assumed the flowchart begins with the pager in an unsynchronized state. In step 170, the receiver is activated. Step 172 attempts bit synchronization for a predetermined time, preferably a time greater than the time of one frame. If synchronization is unsuccessful, step 174 conserves power for a time less than the time of one frame. In other embodiments, the times of steps 172 and 174 may be varied. Thereafter step 170 is again executed. If in step 172, bit sync is found, step 176 searches for frame sync 104. If not found within a predetermined time, preferably a time greater than the time of one frame, step 174 is executed. If frame synchronization is found, step 178 decodes the frame ID signal 106 and cycle signal 108 and masks the signals together. Then step 180 determines if the frame ID and mask were decoded OK. If not, a frame ID not recognized by this embodiment of the invention may be present, or the signal may have been corrupted by noise. In response thereof, step 174 is executed. If decoded OK, step 182 stores the decoded cycle in a temporary register and reads from the code plug the predetermined ID and cycle and masks the values together. For example if the code plug contained a predetermined frame ID of 111 and a predetermined cycle of 000, the mask results in a value of 111. If the decoded frame ID and cycle value were 001 and 100 respectively the resulting mask would be X01 (the X indicating a "don't care"). Step 184 then compares the masked values, 111 and X01 and find them to be not equal. If however the decoded frame ID and cycle were 011 and 100 respectively the resulting mask would be X11, and step 178 would then compare 111 and X11 and find them to be equal. If the compared masks are equal, step 186 synchronously decodes the signal as indicated by Figure 4. In response to step 184 determining the inequality, step 188 determines the next frame where the masks will be equal. In the preceding example wherein the decoded frame ID and cycle were 001 and 100 respectively the resulting mask was X01, it can be determined that after two frames the resulting mask would be Xll thereby providing an equality for step 184. This determination may be made because the frame are consecutively numbered. Thus step 184 would conserve power for substantially two frames. Similar determinations may be made for systems having more frame numbers occurring in any predetermined sequence.

Figure 4 shows a flowchart of a pager synchronously decoding in accordance with the present invention. The flowchart is entered at step 200 from step 184. Step 204 decodes message signals from words 110 and any boundary signal from word 108. Is should be appreciated that power conservation may be performed in this step by only activating the receiver in coincidence with the occurrence of address signals as indicated by a boundary signal. In the event of an address matching a predetermined address assigned to the pager, an alert may be generated, and the message information signals associated with the address decoded. The message signals may then be displayed for reading by the user of the pager. Then in step 206, which is similar to the operation of step 188, the next frame having equal masks is determined. Power is then conserved until then. Then in step 208 the receiver is again activated. In step 210, bit and frame synchronization, and the frame ID and cycle values are searched for in substantial coincidence with their expected occurrence.

Step 212 checks if synchronization is maintained. Step 212 checks if frame synchronization has been missed for a predetermined number "N" of consecutive times. In one embodiment, the number "N" is selected so that the pager may synchronously operating in a noise environment for several hours. If synchronization is not maintained, the flow chart exits through step 213 to step 174 to attempt to regain synchronization. By making the value for "N" large, the pager can efficiently conserve power in a noise environment. Additionally, the long synchronization lock time provided for by a large "N" provides for the interruption of the signal by other paging protocols communicating message information while maintaining bit and frame synchronization for the pager.

If synchronization is maintained, as is the expected typical case, step 214 checks if cycle was correctly decoded. If not, the flowchart through step 216, returns to step 204 to decode messages, thereby maintaining the cycle value from a previous decoding of the cycle. Furthermore, in the event bit or frame synchronization were missed in step 210, bit and frame synchronization can be maintained from a previous successful synchronization. This path may be taken in the event a frame ID not recognized by the pager of this embodiment is transmitted or if the pager is in a noise environment or if an alternate paging protocol is being transmitted. In an alternate embodiment, if either the bit or frame synchronization, or frame ID or cycle were missed, step 216 could proceed directly to step 206 thereby conserving power through the expected message words of the frame.

If decoded OK in step 216, step 218 stores the new decoded cycle in temporary memory and reads the ID and cycle from the code plug and masks them. Step 220 then checks them to be equal. If true the flowchart returns to step 204. If false the flowchart proceeds to step 222 to determine the number of frames until the masks are again equal. The execution of step 222 is typically in response to a change in the received cycle value.

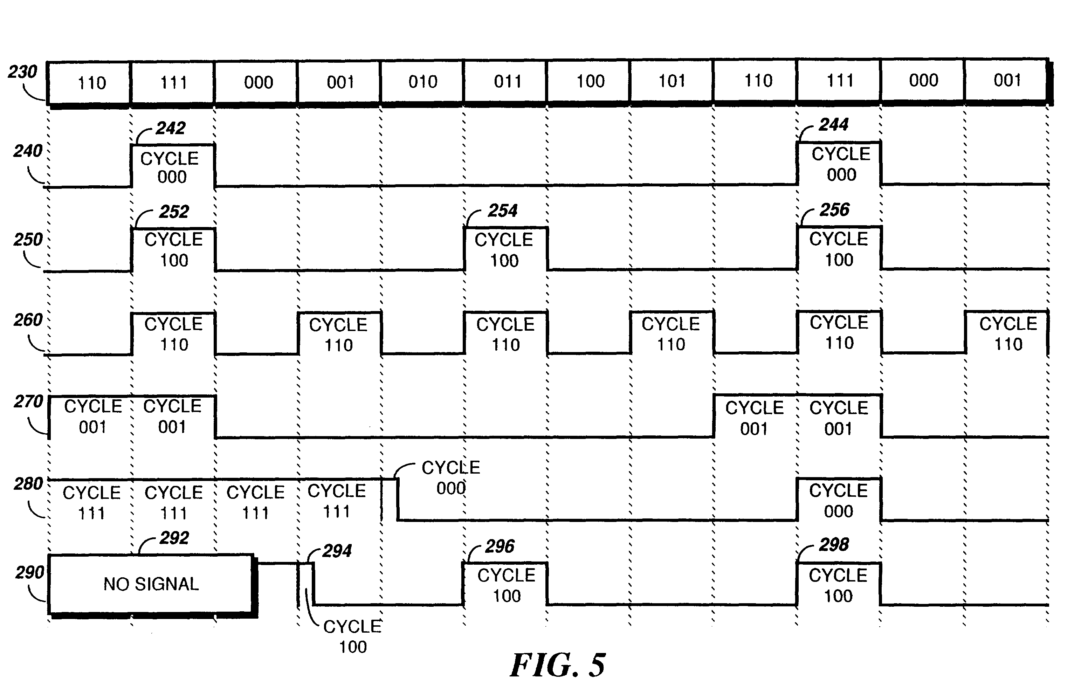

Figure 5 shows an example of a synchronous paging signal and the battery saving operation of the pager of Figure 2. For the sake of simplicity, the example shows a signal 230 having only 2³ (eight) repeating frames numbered 0-7. The frame numbers 0-7 are indicated with the binary equivalent values 000-111. Lines 240-290 shows battery saving and signal processing operation of a pager having a predetermined frame ID of 111 and a predetermined cycle value of 000 (thereby indicating the pager at the minimum decodes only in frame 111). A logic high on line 240-290 indicates the pager is receiving and processing information and a logic low indicates the pager is conserving power. Line 240 shows pager operation when cycle signal 108 comprises a 000. This cycle signal indicates that only the frame assigned to the pager is to be decoded. This is evidenced by high logic states 242 and 244 which are in coincidence with frame 111.

Line 250 shows the pager operation with a cycle value of 100. In this case the resulting mask of the received frame ID and cycle are X11 during intervals 252, 254, and 256. A mask of X11 equals the predetermined frame ID of 111 during frames 011 and 111 of line 230. Similarly line 260 shows the operation of the pager receiving a cycle of 110 which causes the receiver to receive and process in frames 001, 011, 101, and 111. Similarly line 270 shows the operation of a pager receiving a cycle of 001.

Line 280 shows the pager receiving a cycle of 111 for four frames and a cycle of 000 thereafter. While the cycle is 111 the pager decodes in every frame, and when the cycle is changed to 000, the pager decodes only in a frame having a frame ID equal to the predetermined ID assigned to the pager. Also notice that upon receiving a cycle wherein the masks are not equal, receiving and processing of the frame is terminated and because the frames are numbered in a predetermined sequence, the pager is capable of reactivating precisely in time to decode the correct frame.

Line 290 shows the pager synchronizing to the system. During interval 292 no signal is received, possibly because the pager was switched off during this interval. During interval 294 the signal is received and bit and frame synchronization is accomplished. Then a frame ID of 001 and a cycle of 100 is detected. The pager then determines that frame 011 results in matching masks, conserves power for the duration of frame 001 and receives and processes information during frame 011 as shown by interval 296. The pager is synchronized to the system and conserves power after frame 011 until frame 111 wherein the masks are again equal.

Thus Figure 5 shows that a pager may be reassigned to a number of frames using the cycle value. The pager may additionally quickly determine the proper frame for decoding in the event the cycle value is changed, or when synchronization is initially acquired. In systems having more than eight frames, such as a sixty four frame system, the advantages to battery saving and traffic management are even more evident.

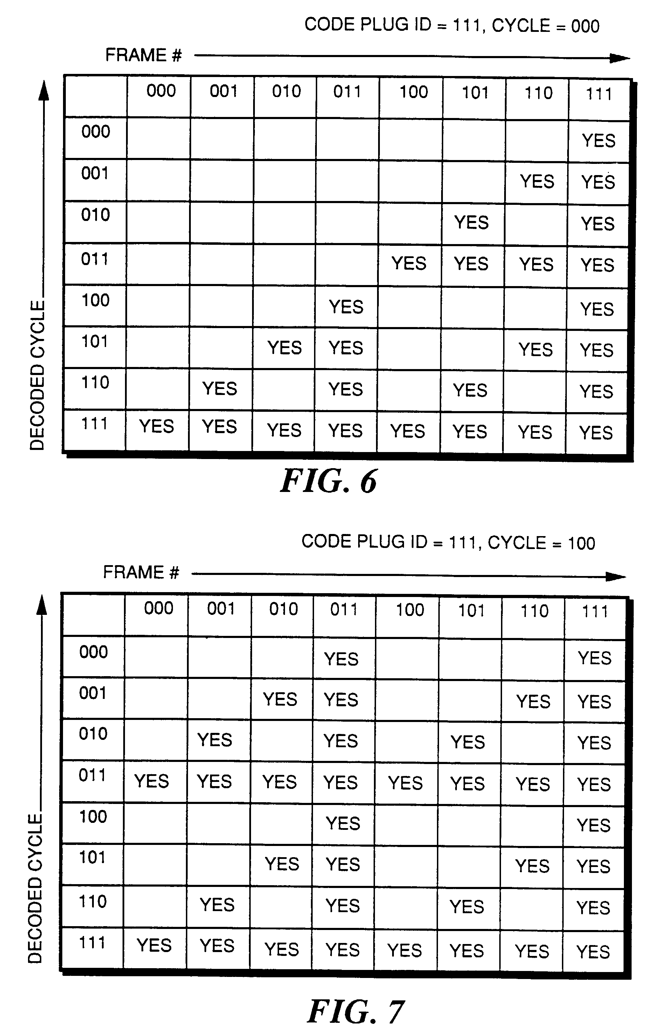

Figure 6 shows a table of the possible frames in which a pager having a predetermined ID of 111 operating in the eight frame signal of Figure 5 may decode signals. The pager has a predetermined cycle of 000. The top row corresponds to the frame numbers of line 230 of Figure 5. The left column corresponds to the decoded cycle signal 108 of Figure 1. A "YES" entry in the table corresponding to the top row and left column indicates frame in which the pager of the example will receive and process information. It can be seen by the column associated with frame 111 that the pager of the example will always be active in its own frame. It can be further seen by viewing the bottom row that a cycle value of 111 will cause the pager to be active in every frame.

Figure 7 shows a table of possible frames of the pager of Figure 6 wherein the pager alternately has a predetermined cycle value of 100. The resulting mask is a X11. Thus the pager behaves as if it is assigned to both frames 011 and 111.

Figure 8 shows a block diagram of a paging terminal generating a paging signal in accordance with Figure 1. The functions of the paging terminal may be implemented within software operating within a MODAX 500 Radio Paging Terminal which is manufactured by Motorola Inc. Message receiver 320 receives messages for pagers typically from the public switched telephone network. The appropriate protocol and address is determined for the message. If the message is not to be sent via the signal format of the present invention, it is sent to one of the other protocol generators 322 which may include GSC and POCSAG protocol generators. Messages to be transmitted on the protocol of the present invention are stored in a frame queue buffer 324 which has queues for the corresponding frames of the signal. The predetermined frame ID of the pager corresponding to the message is determined and the message is stored in the corresponding frame queue. Capacity analyzer and frame ID/cycle generator 326 determines the sequence of frame IDs to be transmitted, analyzes the capacity of each frame and determines the cycle value to be used. The capacity analyzer is also responsive to other protocols being transmitted. If the expected occurrence of a frame is to be replaced by the transmission of one of the other protocols (thereby diminishing the capacity of the frame), the capacity analyzer can account for this with the determined cycle value. Bit and frame sync generator 328 synchronously generates bit and frame synchronization signals. Message formatter 330 determines in response to the current combination of pagers decoding messages in a frame, the frame queues from which messages may be included within the current frame. The messages are then formatted for transmission. Transmitter 332 accepts signals from means 328, 330 and 322 and modulates and radio frequency transmits the paging signals to pagers through antenna 334.

Figure 9 shows a flowchart of the operation of the capacity analyzer and cycle generator of Figure 8. Step 350 examines the frame queues of buffer 324. With each frame being approximately 4 seconds long and having a base data rate of 1200 bits per second, each frame capacity is approximately 4,800 bits of synchronization and information code words. If the traffic capacity of any of the buffers is not exceeded, step 352 sets the cycle value to 000, thereby causing pagers only to operate in frames corresponding to the information within their respective code plugs. If however the frame capacity is exceeded, step 354 determines a frame having a lesser capacity utilization (lesser traffic) which is available for combining by the cycle value, and the frames are combined. The step 356 determines if the frame capacity of the combined frames are still exceeded. If not, step 360 sets the cycle value according to the determined value. If however the capacity is still exceeded, step 362 combines more frames as provided for by the cycle value. Then step 364 determines if all of the frames of the system have been combined. If not, the program returns to step 356 and a check for exceeded capacity is again made. If in step 364 all frames are combined a cycle of 111 is selected. From either step 360 or 366, step 350 is returned to. This process allows for continuous adjustment of the cycle value to accommodate variation in message traffic which cause the capacity of frames to be exceeded. It should be appreciated that the rate of change of the cycle value may be further governed in order to regulate rapid changes in the operation of the paging system. Additionally, the changes in the operation can be weighed against the extra power consumption the changes cause in the individual pagers receiving the system. Pagers caused to decode in extra frame in response to the cycle value also expend additional power while decoding in those frames.

Figure 10 shows a table indicating frames in which pagers will decode in response to the cycle signal. The table corresponds to the eight frame ID example. The top row indicates the the frame ID number while the left column indicates the cycle value. The entries in the table correspond to the decimal equivalent of pagers having predetermined frame IDs which decode information in the frame. As can be seen, a cycle value of 000 causes only pagers having predetermined frame IDs matching the frame ID to decode in the frame, while a cycle value of 111 causes all pagers (predetermined frame IDs of 0-7) to decode in every frame.

An example of the use of the table is given. Say the traffic capacity of frame 7 (111) is exceeded, upon examining the other frame queues, it is determined that substantial capacity of frame 3 is not utilized. Thus frames 7 and 3 may be combined with a cycle value of 100. This cycle value may be utilized until the capacity of frame 7 is no longer exceeded (in response to which the cycle value would be returned to 000). If however the capacity of combined frames 3 and 7 is still substantially exceeded and it is determined that frames 1 and 5 still have remaining capacity, a cycle value of 110 could be used thereby combining frames 1, 3, 5, and 7.

Thus, a paging receiver which responds to the synchronized signal and a terminal which generates the synchronization signal has been described. In alternate embodiments, some pagers may require additional battery saver performance and may not respond to the the cycle value, thereby decoding only those frames indicated by the code plug. Alternately, the pager could respond only to a portion of the cycle value. In such an embodiment the pager may only respond to the least significant one or two bits of the cycle value thereby limiting the number of possible frames in which the pager must be active in order to decode message information. The paging terminal must correspondingly be programmed with a table of pagers having limited response to the cycle value in order to direct message information to those pagers in the proper frames.

Figure 11 shows an alternate signal in accordance with the present invention. The signal of Figure 11 has substantially the same attributes as described in the signal of Figure 1 with the exception of words 400 and 402. Word 400 includes the frame IDs which need not be numbered in sequence and may be one of any number of frame IDs. This provides for adding frame IDs to the paging system as requirements change. However, each frame ID has a predetermined period which need not be the same period as other frame IDs on the system. Word 402 comprises interval and/or repetition values. Word 402 may additionally include a boundary signal indicative of the boundary between address and data portions of words 110.

Figure 12 shows a block diagram of the paging receiver which decodes the signal of Figure 11. The majority of the functions of the pager are identical with the receiver of Figure 2. Antenna 120, receiver 122, and display 154 are substantially identical in function to those of Figure 2. Code plug 140 includes the predetermined frame ID 142 and further includes predetermined period and repetition values 410. The period corresponds to the predetermined period of the predetermined frame ID 142. Decoder 124 has bit and frame synchronizers 126 and 128 respectively, and frame ID decoder 130 and message decoder 152 which substantially operate the same as those of Figure 2. Interval and repetition decoder 420 decodes signal 400. Comparator 422 sends a signal to battery saver 424 when the decoded frame ID equals the predetermined frame ID 142. In response to the comparator 422 and the interval and repetition signal 402 and the predetermined period and repetition 410, battery saver 424 causes receiver 122 to either activate or conserve power.

Figure 13 shows a flowchart of the operation of the receiver of Figure 12. Steps 170-176 have been described with respect to Figure 3. Upon finding frame synchronization in step 176, step 440 checks if the received frame ID 400 matches the predetermined ID 142. If equal, synchronous decoding occurs in step 442 which is described in detail in Figure 14. If the inequality is determined in step 440, step 444 decodes messages within the frame. The functions of this step are similar to those of step 204 of Figure 4. If an address matching a predetermined address assigned to the pager is found, an alert may be generated and information associated with the address may be decoded and stored for later display. Power conservation may be performed in this step after the address portion of the frame is received. Step 446 again searches for bit and frame synchronization. Step 448 checks if frame synchronization has been missed for a predetermined number of times. If true, step 172 is again executed and synchronization is again acquired. If false, step 440 is again executed.

The flowchart of Figure 13 provides for decoding of information within every frame until a frame having a frame ID corresponding to the predetermined frame ID is found. If the synchronization of step 446 is unsuccessful, subsequent executions of step 444 may use the synchronization from prior successful attempts.
Alternately, step 444 may conserve power during the remainder of a frame if the synchronization of step 446 was unsuccessful.

Figure 14 shows a flowchart of the synchronous operation of the receiver of Figure 12. The flowchart is entered at step 450 via step 442 of Figure 13 wherein a frame ID 400 matched predetermined ID 142. Step 452 reads default interval and repetition values 410 from the code plug and stores the values in temporary memory. Then the received interval and repetition signal 402 is decoded. If decoded OK step 454 causes step 456 to substitute the decoded values with the corresponding values from the code plug by overwriting the temporary memory. If not decoded OK, step 456 is bypassed whereby the code plug values remain in temporary memory. The step 458 sets a temporary variable TREP equal to the repetition value stored in the temporary memory. Then, similar to the processes described in step 444, step 460 decodes the messages in the frame. After decoding the frame step 462 checks if TREP has a value of zero. If false, step 464 searches for bit and frame sync in the next frame, decrements TREP and returns to step 460. Steps 460-464 provide for a number of frames to be decoded in repetition according to a repetition value either received in the signal or stored in the pager code plug. A preferred application is to have the transmitted repetition value less than or equal to the repetition value of the code plug.

After the repetition cycle is completed, step 466 determines if the number of frames since the previous decoding of the frame ID equals a value of a non-zero integer M times the ratio of the predetermined period P, divided by the interval I, stored in the temporary memory. If false, power is conserved for one frame in step 468 and step 466 is again executed. Steps 466 and 468 provide for variations in the interval in which frames are decoded. If for example, the received interval had a value of one, executions of step 466 would result in an inequality until the number of frames since the frame ID equaled the period of the frame ID (M=1). If for another example the predetermined period of a frame was 8 and the received interval was 1, step 466 would result in an equality (M=1) after eight frames have elapsed since the prior detection of the frame, which would be in coincidence with the the next occurrence of the frame. If however, the received interval was 2, step 466 would result in an equality (M=1 and 2) both after four and eight frames have elapsed since the prior detection of the frame, the latter would be in coincidence with the the next occurrence of the frame while in the former additional message information may be included for pagers assigned to the frame.

When step 466 results in an equality, step 470 activates the receiver and searches for bit and frame synchronization. Then step 472 determines if the number of frames since the detection of the frame ID corresponds to an integer K times the predetermined period of the frame ID. If false,step 472 proceeds to step 458 to decode the number of frames specified by the repetition value stored in temporary memory. If true, step 474 checks if the frame ID is found. If true, step 452 is again executed through connector "1". If false step 476 checks if the frame ID has been missed for a predetermined number N of consecutive times. If false, synchronization is maintained, and step 452 is again executed. If true, the flowchart returns 478 to reacquire synchronization at step 174 of Figure 13.

In a typical operation, step 474 is executed in correspondence with the predetermined period of the predetermined ID assigned to the pager. The predetermined value N of step 476 may be selected to maintain synchronization for long periods of time in the absence of signal. These periods can extend to hours or days depending on parameters of the system, thereby providing for efficient battery saving in the absence of a signal receivable by the pager.

Figure 15 shows an example of a synchronous paging signal and the battery saving operation of the pager of Figure 12. In the example the pager has a predetermined frame ID of 89. Line 500 shows that the predetermined period of frame 89 is 8 frames, that is a frame having an ID of 89 occurs every eighth frame. The frame IDs of the intervening frames are shown as "***" and are not relevant because the pager only recognizes the frame ID of 89. Lines 510-560 show the power conservation and receiving and processing strobe of the pager. A logic high indicates frames where the pager is receiving and processing information and a logic low indicates frames where the pager is conserving power.

Line 510 shows the pager receives and processes only during the occurrence of frames having an ID of 89 (every eighth frame) when the interval signal is a 1 and the repetition signal is a 0. Line 520 shows that the pager receives and processes every fourth frame when the interval signal is a 2 and the repetition signal is a 0. Note that any frame ID, interval, or repetition signal in the fourth frame after frame 89 is ignored by the pager since it does not occur in a frame having an ID of 89. Line 530 shows that the pager receives and processes every other frame when the interval signal is a 4 and the repetition signal is a 0. Line 540 shows that the pager receives and decodes in 2 consecutive frames in response to the repetition signal being a 1. Line 550 shows that the pager receives and decodes in 3 consecutive frames in response to the repetition signal being a 3. And line 560 shows that the pager receives and decodes in two consecutive frames every fourth frame in response to the interval signal being a 2 and the repetition signal being a 1.

Figure 15 shows the flexibility of programming frames for a pager using the interval and repetition values. A pager assigned to a particular frame ID may be programmed to decode in various frames. Furthermore, a first frame ID may have a period different from a second frame ID.

Figure 16 shows a block diagram of a paging terminal generating a paging signal in accordance with Figure 11. The functions of the paging terminal are substantially identical to the functions described with respect to Figure 8 having identification numbers corresponding thereto. The difference being traffic analyzer and frame ID, interval and repetition generator function 570. This function generates frame IDs at the predetermined period, determines the interval and cycle values to be included within a frame in response to the traffic conditions of the frame. As in the capacity analyzer 326 of Figure 8, means 570 is also responsive to other protocols being transmitted.

Figure 17 shows the operation of the traffic analyzer and interval and repetition generator. When a frame ID is being transmitted, step 580 sets the repetition value. First the instantaneous change in traffic for the frame is determined. If the increase in traffic from a prior period of the frame is in the range of 0 to five thousand bits, a repetition value of zero is selected. This indicates a steady average traffic for the frame. If however a change in the order of five thousand to ten thousand bits per period was detected, the repetition value of one is selected. This value would represent a momentary substantial increase in frame traffic such as the increase due to one very long information message. This kind of increase is compensated for by causing pagers to decode in the immediately following frame. The repetition value increases as the magnitude of the instantaneous traffic increases.

Thereafter, step 582 determines the average frame traffic. This determination may be made by averaging the number of bits per period received for the frame over a predetermined number of frame periods. Step 582 shows that the interval is set to zero if the average traffic is zero to five thousand bits, and the interval value increases with increasing traffic.

Thus Figure 17 shows increasing the repetitions of pagers assigned to a frame ID in response to instantaneous changes in frame traffic and increasing the interval in response to changes in the average traffic of a frame ID. Different criterion can be used to adjust repetition and interval values in other embodiments.

Figure 18 shows an alternate synchronous signal in accordance with the present invention. The signal of Figure 18 has substantially the same attributes as described in the signal of Figure 11 with the exception of words 600 and 602. Word 600 includes the frame IDs which need not be numbered in sequence and there may be any number of frames IDs. Furthermore, additional frame IDs may be added as system requirements change. Each frame ID may occur at any interval. Thus a frame ID may "skip" through the synchronous signal as required. Word 602 comprises a skip value which indicates the minimum number of frames until the occurrence of the frame ID. Word 602 may additionally include a boundary signal indicative of the boundary between address and data portions of words 110.

Figure 19 shows a block diagram of the paging receiver which decodes the signal of Figure 18. The majority of the functions of the pager are identical with the receiver of Figure 2. Antenna 120, receiver 122, and display 154 are substantially identical in function to those of Figure 2. Code plug 140 includes the predetermined frame ID 142 and further includes a predetermined minimum skip value 610. Decoder 124 has bit and frame synchronizers 126 and 128 and frame ID decoder 130 and message decoder 152 which substantially operate the same as those of Figure 2. Skip decoder 620 decodes signal 402. Comparator 622 sends a signal to battery saver 624 when the decoded frame ID equals the predetermined frame ID 142. In response to the comparator 622 and the skip signal 602, battery saver 624 causes receiver 122 to either activate or conserve power.

The pager operating in accordance with this embodiment acquires synchronization to the signal by performing steps identical to the steps shown in Figure 13 with the exception being that step 442 now refers to the flowchart of Figure 20.

Figure 20 shows a flowchart of the synchronous operation of the receiver of Figure 19. Having found a frame ID matching the predetermined frame ID within the pager code plug (step 440 of Figure 13), the operation proceeds to enter the flowchart, step 650 of Figure 20. As in step 460 of Figure 14, step 652 decodes the messages in the frame and additionally decodes the skip value. Step 654 determines if the skip value was decoded OK in step 652 (this portion of the transmission may have been disrupted by noise) If true, step 656 conserves power for the number of frames indicated by the skip value. If false, power is conserved for the minimum skip value in the code plug. From either step 656 or 658, step 660 activates the receiver and searches for bit and frame synchronization and the frame ID. If a frame ID is found matching the predetermined frame ID in step 662, the flowchart returns to step 652 to again decode messages. If the frame ID is not found, step 664 determines if frame sync has been missed for a predetermined number N consecutive times. If not, the pager is still synchronized and step 666 causes the messages in the frame to be decoded (as in step 652) and power is conserved for the minimum skip value, wherein the next frame in which decoding is to be performed is determined with respect to the last occurrence of a frame having the frame ID matching the predetermined frame ID of the decoder. Thereinafter the flowchart returns to step 660. However, if in step 664, frame synchronization has been missed for N consecutive times, the flowchart exits, step 668, to step 174 of Figure 13 to reacquire synchronization.

Thus in response to the skip value, a pager may conserve power for any number of frames. Additionally, if the pager is decoding in a frame wherein the frame ID is not found, the pager may decode at frame intervals corresponding to the minimum skip value. In practice, the skip and minimum skip values should be related in such way that a pager having found at least a first frame having the frame ID of the pager, and the pager utilizing only the minimum skip values will always decode in a frame having the frame ID of the pager.

Figure 21 shows an example of a synchronous paging signal and the battery saver operation of the pager of Figure 19. In the example the pager has a predetermined frame ID of 99. Lines 700 and 740 shows that the frame ID 99 may occur at a multitude of positions. Line 700 shows the frame ID of 99 occurring eight frames apart while line 740 shows the frame ID of 99 occurring three and five frames apart. The frame IDs of the intervening frames of lines 700 and 740 are shown as "***" and are not relevant because the pager only recognizes the frame ID of 99. Lines 710-730 and 750-760 show the power conservation and receiving and processing strobe of the pager. A logic high indicates frames where the pager is receiving and processing information and a logic low indicates frames where the pager is conserving power.

Line 710 shows a pager which, from a previous skip value, has been directed to decode in coincidence with the occurrence of the first frame 99 of the Figure. This frame has a skip value of 7 which causes the pager to conserve power for seven frames and begin decoding thereafter, which is in coincidence with the second occurrence of frame ID 99 of line 700. During the second occurrence of frame ID 99 the pager receives a new skip value of 45, which causes the pager to conserve power for 45 frames subsequent.

Line 720 shows a pager which, from a previous skip value, has been directed to decode in coincidence with the occurrence of the first frame 99 of the Figure. The pager of line 720 has a predetermined minimum skip value of "0". The decoded skip value of 6 causes the pager to conserve power for 6 frames. Upon activating, the pager does not recognize the frame ID of the seventh frame but decodes information in that frame. The subsequent frame contains the ID of 99 and a skip value of 245. The pager decodes the frame and conserves power for 245 frames. Thus by providing a skip value less than the occurrence of the next frame ID for a pager, the pager can be made to decode in additional frames. Upon finding the frame ID of the pager, additional power conservation is performed.

Line 730 shows the operation of a pager having a minimum skip value of 1. Having decoded the first frame having an ID of 99, the pager receives a skip value of 3 and conserves power for 3 frames. The information in the forth frame is decoded, however, a frame ID of 99 is not found. Thus the pager decodes the fourth frame and conserves power for the minimum skip value of 1 and decodes the sixth frame. This frame also does not have a frame ID of 99 and power is again conserved for the minimum skip value of 1 frame. The pager then decodes the eight frame wherein the frame ID of 99 is found and a skip value of 73 is decoded. After decoding the frame, the pager conserves power for the subsequent 73 frames. Thus a pager with a minimum skip value of one decodes every other frame until a frame having the frame ID of the pager is found.

Line 750 shows a pager decoding the signal of line 740. Upon decoding the first frame of line 740 having an ID of 99 and a skip value of 0, the pager decodes in every subsequent frame until a frame having an ID of 99 is again found. Three frames later, frame ID 99 and a skip value of 4 is found. Thus the pager has decoded in four consecutive frames. In response to a skip value of 4 the pager conserves power for four frames wherein it reactivates, decodes the frame and responds to a new skip value of 43. Line 760 shows another example of a signal as in 740 wherein every skip value corresponds to the occurrence of frames having a frame ID of 99.

Figure 22 shows a block diagram of a paging terminal generating a paging signal in accordance with Figure 18. The functions of the paging terminal are substantially identical to the functions described with respect to Figure 8 having identification numbers corresponding thereto. The difference being traffic analyzer and frame ID and skip value generator function 800. This function generates frame IDs and determines the skip values to be included within a frame in response to the traffic conditions of the frame. As in the capacity analyzer 326 of Figure 8, means 800 is also responsive to other protocols being transmitted.

Figure 23 shows a flowchart detailing the operation of the traffic analyzer and interval and repetition generator. When a frame ID is being transmitted, step 810 determines the average frame traffic and the next available frame having a vacant frame ID. Then step 812 determines if the amount of traffic is greater than the traffic provided for by the next vacant frame. If not, step 816 determines the subsequent available frame having a vacant frame ID, and returns to step 812. This sequence continues until the step 812 is satisfied. Then in step 814 the frame ID is assigned to the last determined frame. A skip value is set to either correspond to or be less than the occurrence of the of the determined frame in order that the extra frames may accommodate traffic sufficient to change the equality of step 812.

In alternate embodiments, frame IDs may be assigned additionally in response to a minimum and/or maximum number of frames between frame IDs associated with a each frame ID. Additionally, the assigned frame must provide for any minimum predetermined skip value associated to the pagers having that predetermined frame ID.

Thus, signals corresponding to three embodiments of the invention has been shown. Figure 1 shows a signal which has a predetermined number of frame IDs numbered in a predetermined sequence. Figure 11 shows a signal in which any number of frame IDs may be used in any sequence, however the period of each frame ID is constant. Figure 18 shows a signal in which any number of frame IDs may be used in any sequence. Although the repetition value has been shown in conjunction with the signal of Figure 11, it should be appreciated that the repetition value may be used with any of the signals of the invention, or entirely eliminated. Additionally, with some minor modifications to the signal of Figure 1, all three signals may be combined, thereby providing an extremely flexible paging system. Since pagers receiving signals of Figures 1, 11 and 18 need not decode frame IDs and cycle, interval, period or skip values in every frame in which messages are decoded, and since the bit sync 102, frame sync 104 and message signals 110 have the same messages, messages within frames having frame IDs of one embodiment may be properly decoded by pagers operating in accordance with another embodiment of the invention. In order to provide for an efficiently operating paging system, means for frame assignment of one, two or all three of the embodiments should be provided.

Figure 24 shows an example frame assignment that combines signals of Figures 1, 11 and 18 and signals of other paging protocols. Line 900 shows frames numbered 1 through 48, each frame having common bit sync, frame sync and message information structure signals. Line 910 shows frames wherein frame IDs are assigned in accordance with Figure 1. This embodiment of the invention has been modified such that every other frame is assigned a frame ID in accordance with Figure 1. The frame IDs could be numbered in even increments between values of 1 and 63 and cycle values selected as such that pagers only decode in odd numbered frames. This provides for frame IDs of the remaining embodiments to be placed in the even numbered frames. It should be further appreciated that using this modification, frame IDs operation in accordance with Figure 1 may alternately be used every 4th, 8th ... 2ⁿ frame, thereby providing for even more frames to be used by the remaining embodiments. Pagers receiving the frames of line 910 operate according to the cycle value received in the frames.

Lines 920, 922 and 924 show frames with frame IDs operating in accordance with the signal of Figure 11. Line 920 shows a frame ID which has a period 12 frames, line 922 shows a frame ID which has a period of 6 frames and line 924 shows a frame ID having a period of 18. Pagers decoding in frames of either lines 920, 922 or 924 operate in accordance with the interval and repetition signals contained therein.

Line 930 shows remaining frames which are available for use with frame IDs used in accordance with the signal of Figure 18. Any number of frame IDs may be used on the frame of line 930, each frame ID including a skip value causing pagers to conserve power in accordance with the pager of figure 19. The frame IDs of frames on lines 920-930 are preferably different from those of line 910 such that they are not recognized by pagers decoding the signal of Figure 1.

For example, the period of the frame ID of line 920 is 12. If the interval in frame 2 of line 900 were a value of 3, the group of pagers having the frame ID of line 12 would also decode in frame numbers 6 and 10. The frame ID of these frames belong to pagers of lines 922 and 924 respectively. If in another example the interval in frame 2 of line 900 were a value of 4, the group of pagers having the frame ID of line 12 would also decode in frame numbers 5, 8 and 11. Frame IDs of frames 5 and 11 are assigned to the pagers of line 910 while the frame ID of frame 8 is assigned to the pagers of line 930. Thus, in this example pagers of the embodiment corresponding to Figure 11 decode message information in frames operating corresponding to the embodiments of Figures 1 and 18.

Items 940, 950 and 960 show that other signalling protocols may co-exist with the embodiments of the present invention. Preferably each frame is substantially 4 seconds in duration. Item 940 shows that a GSC signal is transmitted in place of frames indicated by 20, 21 and 22 on line 900. The GSC signal may be either data messages or voice messages. The GSC signal makes decoding of frame IDs and information by pagers of the invention impossible. Since pagers of the invention have a predetermined response to the absence of frame IDs, the subsequent frames in which the decode my be predicted.

Pagers operating in accordance with line 910 having missed a frame ID in frame indicated by 21 will find a proper frame ID in the frame indicated by 23. These pagers will respond according to the previous cycle value in the other frames of line 910.

Pagers operating in accordance with line 922, having missed a frame ID in the frame indicated by 22, will find a proper frame ID in the frame indicated by 28. The response of the group of pagers in the intervening frames is predictable based on the predetermined interval and repetition values assigned to the group of pagers, thus messages for the pagers may be placed in the intervening frames.

Pagers operating in accordance with line 930 having been programmed to expect a frame ID in frame 20, will miss the frame ID and decode in accordance with the minimum skip value assigned to the group of pagers. If the minimum skip were 0, these pagers would decode in every subsequent frame until a frame ID matching their predetermined frame ID were found. Thus, messages for these pagers could be placed in any frame after frame 22. In order to restore battery saving operation of these pagers, a frame having their frame ID could be forced in another frame, for example frame identified by number 26, thereby giving these pagers a new skip value. Since the frame identified by 26 was apriori assigned to pagers of line 920, the pagers of line 920 would miss their expected frame ID at frame 26, causing these pagers to decoded according to their predetermined interval and repetitions values until the occurrence of frame identified by 38. Thus the response of the pagers of the invention to the GSC message is predictable, and synchronization to the signal is maintained.

Similar example responses to the POCSAG signal 950 and the analog voice signal 960 may be made.

It should be appreciated that since pagers of all three embodiments continue to decode in a known manner if an expected frame ID and or cycle value is not found. This provides for the transmission of another protocol such as the POCSAG or GSC paging protocol while pagers of the present invention remain in synchronization. Furthermore, this aspect provides for forcing the frame ID of a first frame of pagers in the expected frame of another group of pagers location in order that battery save interval of the first group of pagers may be adjusted.

Furthermore, the similarity in the paging terminals of Figures 8, 16 and 22 provides for the combination of the functions. Furthermore, frame queue 324 may hold the queue of the frames of all three embodiments. Thus, a frame which may have pagers of one, two or all three embodiments may be analyzed by the capacity analyzer of each embodiment for total frame capacity. The pagers of Figures 2, 12 and 19 operate substantially identically with the exception of the response to the receive frame ID and cycle, interval and repetition, or skip value. Thus, means for decoding any of the three embodiments may be incorporated into every pager, and an additional signal stored in the code plug of the pager may indicate to which embodiment of the invention the pager is to operate.

## Claims

1. A selective call receiver (FIG. 2) comprising : a memory (140) having a first mask (142, 144) stored therein indicative of a first period of reception for receiving a transmitted communication signal having a plurality of packets (110), CHARACTERIZED BY:
each packet (100) having:
an identification signal (106) for identifying the packet,
message information (110), and
a control signal (108) separate from and subsequent to the identification signal (106), wherein the identification signal (106) and the control signal (108) are representative of a second mask indicative of a second period of reception,
said selective call receiver (FIG. 2) comprising:
means for receiving (122) the control signal (108) and the identification signal (106) within the packet (100);
comparing means (136) for comparing the first mask and the second mask for establishing a correspondence therebetween; and
battery saving means (150) responsive to the comparing means (136) for temporarily changing the first period of reception to the second period of reception of said selective call receiver (FIG. 2) for receiving an at least one additional packet.

2. The selective call receiver according to claim 1 wherein the battery saving means (150) comprises a detecting means for detecting whether the second period of reception is more frequent than the first period of reception.

3. The selective call receiver according to claim 2 wherein the battery saving means (150) further includes a changing means for temporarily changing the first period of reception of said selective call receiver to the second period of reception when the second period of reception is more frequent than the first period of reception.

4. The selective call receiver according to claim 3 wherein said changing means maintains the first period of reception when the second period of reception is less frequent than the first period of reception.

5. In a selective call receiver (FIG. 2), a method for receiving a transmitted communication signal comprising the steps of : using predetermined signals (142, 144) assigned to the selective call receiver (FIG. 2) representative of a first mask indicative of a first period of reception for receiving the transmitted communication signal having a plurality of packets (100), CHARACTERIZED BY:
each packet (100) comprising:
an identification signal (106) for identifying the packet,
message information (110), and
a control signal (108) separate from and subsequent to the identification signal (106), wherein the identification signal (106) and the control signal are representative of a second mask indicative of a second period of reception for enabling the selective call receiver (FIG. 2) to receive at least one additional packet, said method further comprising the steps of:
receiving (214) the control signal (108) and the identification signal (106) within the packet;
comparing (220) the first mask with the second mask;
establishing (184) in response to the comparing step a correspondence between the first mask and second mask; and
temporarily changing (188) the first period of reception of said selective call receiver to the second period of reception for receiving an at least one additional packet.

6. The method according to claim 5 wherein said step of receiving further includes the steps of:
analyzing the message information within the received packet; and
generating an alert signal in response to a detection of a message having an address signal corresponding to a predetermined address signal assigned to the selective call receiver.

7. The method according to claim 5 or 6, wherein the communication signal has a predetermined sequence of identification signals occurring in a predetermined sequence and said method further comprises the step of
determining the occurrence of additional packets as a function of the predetermined number of identification signals, the received identification signal and the received control signal.

8. A selective call receiver system (FIG. 8) comprising : transmitting means (332, 334) for transmitting a communication signal to a plurality of selective call receiver groups, said plurality of selective call receiver groups having a first mask stored within the selective call receivers (FIG. 2) indicative of a first period of reception for receiving the transmitted communication signal having a plurality of packets (110); CHARACTERIZED BY:
means (328) for periodically generating packets, the packet having:
an identification signal (106) for identifying at least one of the plurality of groups of selective call receivers,
message information (110), and
a control signal (108) separate from and subsequent to the identification signal (106), wherein the identification signal (106) and the control signal (108) are representative of a second mask indicative of a second period of reception for enabling the at least one of the plurality of the selective call receiver groups to receive an at least one additional packet;
means (320, 324) for accumulating a plurality of messages;
means (326) for determining the occurrence of the at least one additional packet capable of having message information for the at least one group of selective call receivers;
means (326) for generating the control signal with the second mask indicative of the second period of reception in response to said determination; and
means (330) for incorporating the control signal within the packet to be transmitted to the at least one group of selective call receivers, said packet having an identification signal corresponding a predetermined identification signal assigned to the at least one of the group of selective call receivers.

9. A method of transmitting a signal to a plurality of selective call receiver groups, each selective call receiver having a first mask indicative of a first period of reception of said selective call receiver groups, the method comprising the steps of:
periodically generating packets (100), CHARACTERIZED BY:
each packet (100) having:
accumulating (320, 324) a plurality of messages;
determining the transmission of an at least one additional packet capable of having message information directed to the at least one group of selective call receivers for enabling the at least one group of the selective call receivers to receive an at least one additional packet;
generating (326) the control signal having the second mask indicative of the second period of reception in response to said determination;
incorporating (330) the control signal within the packet having an identification signal corresponding to a predetermined identification signal assigned to the at least one of the group of selective call receivers; and
transmitting (332) the packet.

10. The method according to claim 9 wherein the control signal corresponds to the number of periods of the periodically generated packets between the packet having an identification signal corresponding to a predetermined identification signal assigned to the first group of selective call receivers and the occurrence of a subsequent packet potentially having message information for the first group of selective call receivers.

## Patentansprüche

1. Selektiver Rufempfänger (Fig. 2), welcher einen Speicher (140) mit einer darin gespeicherten ersten Maske (142, 144) als Hinweis auf eine erste Empfangsperiode zum Empfangen eines übermittelten Kommunikationssignals mit einer Vielzahl von Paketen (110) aufweist, DADURCH GEKENNZEICHNET:
daß jedes Paket (100)
ein Kennungssignal (106) zur Identifizierung des Pakets,
Nachrichteninformationen (110) und
ein vom Kennungssignal (106) getrenntes, auf dieses folgendes Steuersignal (108) aufweist, wobei das Kennungssignal (106) und das Steuersignal (108) eine zweite Maske repräsentieren, die eine zweite Empfangsperiode anzeigt,
wobei der selektive Rufempfänger (Fig. 2) folgendes umfaßt:
eine Einrichtung (122) zum Empfangen des Steuersignals (108) und des Kennungssignals (106) im Paket (100);
eine Vergleichseinrichtung (136) zum Vergleich der ersten Maske mit der zweiten Maske zur Ermittlung einer Entsprechung zwischen beiden; und
eine auf die Vergleichseinrichtung (136) ansprechende Batterieschoneinrichtung (150) zum temporären Verändern der ersten Empfangsperiode in die zweite Empfangsperiode des selektiven Rufempfängers (Fig. 2) zum Empfangen wenigstens eines weiteren Pakets.

2. Selektiver Rufempfänger nach Anspruch 1, bei welchem die Batterieschoneinrichtung (150) eine Erfassungseinrichtung aufweist, die feststellt, ob die zweite Empfangsperiode häufiger als die erste Empfangsperiode auftritt.

3. Selektiver Rufempfänger nach Anspruch 2, bei welchem die Batterieschoneinrichtung (150) des weiteren eine Veränderungseinrichtung zum temporären Verändern der ersten Empfangsperiode des selektiven Rufempfängers in die zweite Empfangsperiode umfaßt, wenn die zweite Empfangsperiode häufiger als die erste Empfangsperiode auftritt.

4. Selektiver Rufempfänger nach Anspruch 3, bei welchem die Veränderungseinrichtung die erste Empfangsperiode beibehält, wenn die zweite Empfangsperiode weniger häufig als die erste Empfangsperiode auftritt.

5. Verfahren zum Empfangen eines übertragenen Kommunikationssignals bei einem selektiven Rufempfänger (Fig. 2), welches die folgenden Schritte umfaßt: Verwendung vorgegebener Signale (142, 144), die dem selektiven Rufempfänger (Fig. 2) zugewiesen und repräsentativ für eine erste Maske als Hinweis auf eine erste Empfangsperiode zum Empfangen des übertragenen Kommunikationssignals mit einer Vielzahl von Paketen (100) sind, DADURCH GEKENNZEICHNET:
daß jedes Paket (100)
ein Kennungssignal (106) zur Identifizierung des Pakets,
Nachrichteninformationen (110) und
ein vom Kennungssignal (106) getrenntes, auf dieses folgendes Steuersignal (108) aufweist, wobei das Kennungssignal (106) und das Steuersignal eine zweite Maske repräsentieren, die eine zweite Empfangsperiode anzeigt, um den selektiven Rufempfänger zum Empfangen wenigstens eines weiteren Pakets freizugeben, wobei das Verfahren des weiteren die folgenden Schritte umfaßt:
Empfangen (214) des Steuersignals (108) und des Kennungssignals (106) innerhalb des Pakets;
Vergleichen (220) der ersten Maske mit der zweiten Maske;
im Ansprechen auf den Vergleichsschritt Ermitteln (184) einer Entsprechung zwischen der ersten Maske und der zweiten Maske; und
temporäres Verändern (188) der ersten Empfangsperiode des selektiven Rufempfängers in die zweite Empfangsperiode des selektiven Rufempfängers zum Empfangen wenigstens eines weiteren Pakets.

6. Verfahren nach Anspruch 5, bei welchem der Empfangsschritt des weiteren die folgenden Schritte umfaßt:
Analysieren der Nachrichteninformationen innerhalb des empfangenen Pakets; und
Erzeugen eines Alarmsignals im Ansprechen auf die Erfassung einer Nachricht mit einem Adressensignal, das einem dem selektiven Rufempfänger zugewiesenen vorgegebenen Adressensignal entspricht.

7. Verfahren nach Anspruch 5 oder 6, bei welchem das Kommunikationssignal eine vorgegebene Abfolge von Kennungssignalen aufweist, die in einer vorgegebenen Abfolge auftreten, wobei das Verfahren des weiteren den Schritt zum Ermitteln des Auftretens weiterer Pakete in Abhängigkeit von der vorgegebenen Anzahl von Kennungssignalen, dem empfangenen Kennungssignal und dem empfangenen Steuersignal umfaßt.

8. Selektives Rufempfängersystem (Fig. 8), welches folgendes aufweist: Sendeeinrichtungen (332, 334) zum Übertragen eines Kommunikationssignals an eine Vielzahl von Gruppen selektiver Rufempfänger, wobei in der Vielzahl von Gruppen selektiver Rufempfänger eine erste Maske innerhalb der selektiven Rufempfänger (Fig. 2) gespeichert ist, welche als Hinweis auf eine erste Empfangsperiode zum Empfangen des übertragenen Kommunikationssignals mit einer Vielzahl von Paketen (110) dienen, GEKENNZEICHNET DURCH:
eine Einrichtung (328) zur periodischen Generierung von Paketen, wobei das Paket:
ein Kennungssignal (106) zur Identifizierung wenigstens einer aus der Vielzahl von Gruppen selektiver Rufempfänger,
Nachrichteninformationen (110) und
ein vom Kennungssignal (106) getrenntes, auf dieses folgendes Steuersignal (108) aufweist, wobei das Kennungssignal (106) und das Steuersignal (108) eine zweite Maske repräsentieren, die eine zweite Empfangsperiode zur Freigabe der wenigstens einen aus der Vielzahl von Gruppen selektiver Rufempfänger zum Empfangen wenigstens eines weiteren Pakets anzeigt;
eine Einrichtung (320, 324) zum Aufspeichem einer Vielzahl von Meldungen;
eine Einrichtung (326) zum Ermitteln des Auftretens des wenigstens einen weiteren Pakets, welches in der Lage ist, Nachrichteninformationen für die wenigstens eine Gruppe selektiver Rufempfänger zu übernehmen;
eine Einrichtung (326) zum Erzeugen des Steuersignals mit der zweiten Maske als Hinweis auf die zweite Empfangsperiode in Abhängigkeit von dieser Ermittlung; und
eine Einrichtung (330) zum Einbeziehen des Steuersignals in das Paket, welches an die wenigstens eine Gruppe selektiver Rufempfänger zu übermitteln ist, wobei das Paket ein Kennungssignal entsprechend einem vorgegebenen Kennungssignal aufweist, welches dem wenigstens einen aus der Gruppe selektiver Rufempfänger zugewiesen ist.

9. Verfahren zum Übertragen eines Signals an eine Vielzahl von Gruppen selektiver Rufempfänger, von denen jeder eine erste Maske als Hinweis auf eine erste Empfangsperiode der Gruppen selektiver Rufempfänger besitzt, welches den Schritt der periodischen Generierung von Paketen (100) umfaßt, DADURCH GEKENNZEICHNET:
daß jedes Paket (100)
ein Kennungssignal (106) zur Identifizierung wenigstens einer aus der Vielzahl von Gruppen selektiver Rufempfänger,
Nachrichteninformationen (110) und
ein vom Kennungssignal (106) getrenntes, auf dieses folgendes Steuersignal (108) aufweist, wobei das Kennungssignal (106) und das Steuersignal (108) eine zweite Maske repräsentieren, die für eine zweite Empfangsperiode repräsentativ ist;
Aufspeichern (320, 324) einer Vielzahl von Meldungen;
Ermitteln des Auftretens wenigstens eines weiteren Pakets, welches in der Lage ist, Nachrichteninformationen für die wenigstens eine Gruppe selektiver Rufempfänger zum Freischalten der wenigstens einen Gruppe selektiver Rufempfänger zum Empfangen wenigstens eines weiteren Pakets zu übernehmen; Erzeugen (326) des Steuersignals mit der zweiten Maske als Hinweis auf die zweite Empfangsperiode in Abhängigkeit von dieser Ermittlung; und
Einbeziehen (330) des Steuersignals in das Paket mit einem Kennungssignal in Entsprechung zu einem vorgegebenen Kennungssignal, das dem wenigstens einen aus der Gruppe selektiver Rufempfänger zugewiesen ist, und
Übertragen (332) des Pakets.

10. Verfahren nach Anspruch 9, bei welchem das Steuersignal der Anzahl von Perioden der periodisch generierten Pakete zwischen dem Paket mit einem Kennungssignal entspricht, welches einem der ersten Gruppe selektiver Rufempfänger zugewiesenen vorgegebenen Kennungssignal entspricht, und dem Auftreten eines nachfolgenden Pakets, welches potentiell Nachrichteninformationen für die erste Gruppe selektiver Rufempfänger enthält.

## Revendications

1. Récepteur d'appel sélectif (voir la Figure 2) comprenant une mémoire (140) possédant un premier masque (142, 144) stocké pour fournir une première période de réception pour la réception d'un signal transmis de communication possédant une pluralité de paquets (110), caractérisé en ce que :
chaque paquet (100) comprend :
- un signal d'identification (106) pour l'identification du paquet;
- une information de message (110); et
- un signal de commande (108) séparé et suivant le signal d'identification (106), dans lequel le signal d'identification (106) et le signal de commande (108) sont caractéristiques d'un second masque indiquant une seconde période de réception;
ledit récepteur d'appel sélectif (voir la Figure 2) comprenant :
- un moyen de réception (122) du signal de commande (108) et du signal d'identification (106) dans le paquet (100);
- un moyen de comparaison (136) pour la comparaison du premier masque et du second masque afin d'établir une correspondance mutuelle; et
- un moyen d'économie de batterie (150) raccordé au moyen de comparaison (136) pour faire passer, de façon temporaire, la première période de réception sur la seconde période de réception dudit récepteur d'appel sélectif (voir la Figure 2) pour la réception d'au moins un paquet additionnel.

2. Récepteur d'appel sélectif selon la revendication 1, dans lequel le moyen d'économie de batterie (150) comprend un moyen de détection pour la détection du fait que la seconde période de réception est plus fréquente que la première période de réception ou non.

3. Récepteur d'appel sélectif selon la revendication 2, dans lequel le moyen d'économie de batterie (150) comprend, de plus, un moyen de modification pour faire passer, de façon temporaire, la première période de réception dudit récepteur d'appel sélectif sur la seconde période de réception lorsque la seconde période de réception est plus fréquente que la première période de réception.

4. Récepteur d'appel sélectif selon la revendication 3, dans lequel ledit moyen de modification maintient la première période de réception lorsque la seconde période de réception est moins fréquente que la première période de réception.

5. Procédé de réception d'un signal transmis de communication dans un récepteur d'appel sélectif (voir la Figure 2), comprenant une étape d'utilisation de signaux prédéterminés (142, 144) assignés au récepteur d'appel sélectif (voir la Figure 2) représentant un premier masque indiquant une première période de réception pour la réception du signal transmis de communication possédant une pluralité de paquets (100), caractérisé en ce que :
chaque paquet (100) comprend :
- un signal d'identification (106) pour l'identification du paquet;
- une information de message (110); et
- un signal de commande (108) séparé et suivant le signal d'identification (106), le signal d'identification (106) et le signal de commande (108) représentant un second masque indiquant une seconde période de réception pour la validation du récepteur d'appel sélectif (voir la Figure 2) pour recevoir au moins un paquet additionnel;
ledit procédé comprenant, de plus, les étapes suivantes :
- la réception (214) du signal de commande (108) et du signal d'identification (106) dans le paquet;
- la comparaison (220) du premier masque avec le second masque;
- l'établissement (184), en réponse à l'étape de comparaison, d'une correspondance entre le premier masque et le second masque; et
- le passage temporaire (188) de la première période de réception dudit récepteur d'appel sélectif sur la seconde période de réception pour recevoir au moins un paquet additionnel.

6. Procédé selon la revendication 5, selon lequel ladite étape de réception comprend, de plus, les étapes suivantes :
- l'analyse de l'information de message dans le paquet reçu; et
- la génération d'un signal d'avertissement en réponse à une détection d'un message possédant un signal d'adressage correspondant à un signal d'adresse prédéterminé assigné au récepteur d'appel sélectif.

7. Procédé selon la revendication 5 ou 6, selon lequel le signal de communication possède une séquence prédéterminée de signaux d'identification apparaissant selon une séquence prédéterminée, ledit procédé comprenant, de plus, une étape de détermination de l'apparition de paquets additionnels en fonction du nombre prédéterminé de signaux d'identification, du signal d'identification reçu et du signal de commande reçu.

8. Système de récepteur d'appel sélectif (voir la Figure 8) comprenant un moyen de transmission (332, 334) pour transmettre un signal de communication vers une pluralité de groupes de récepteurs d'appel sélectif, ladite pluralité de groupes de récepteurs d'appel sélectif possédant un premier masque stocké dans les récepteurs d'appel sélectif (voir la Figure 2) indiquant une première période de réception pour la réception du signal de communication transmis possédant une pluralité de paquets (110), caractérisé par :
- un moyen (328) pour la génération périodique de paquets, le paquet comprenant :
- un signal d'identification (106) pour l'identification d'au moins un groupe dans la pluralité de groupes de récepteurs d'appel sélectif;
- une information de message (110); et
- un signal de commande (108) séparé et suivant le signal d'identification (106), le signal d'identification (106) et le signal de commande (108) représentant un second masque indiquant une seconde période de réception pour la validation d'au moins un groupe de la pluralité de groupes de récepteurs d'appel sélectif pour recevoir au moins un paquet additionnel;
- un moyen (320, 324) pour l'accumulation d'une pluralité de messages;
- un moyen (326) pour déterminer l'apparition d'au moins un paquet additionnel pouvant contenir une information de message pour au moins le groupe de récepteurs d'appel sélectif;
- un moyen (326) pour la génération du signal de commande avec le second masque indiquant la seconde période de réception en réponse à ladite détermination; et
- un moyen (330) pour l'incorporation du signal de commande dans le paquet à transmettre vers au moins le groupe de récepteurs d'appel sélectif, ledit paquet possédant un signal d'identification correspondant à un signal d'identification prédéterminé assigné à au moins un récepteur du groupe de récepteurs d'appel sélectif.

9. Procédé de transmission d'un signal vers une pluralité de groupes de récepteurs d'appel sélectif, chaque récepteur d'appel sélectif possédant un premier masque indiquant une première période de réception desdits groupes de récepteurs d'appel sélectif, procédé comprenant les étapes suivantes :
- la génération périodique de paquets (100);
caractérisé par :
chaque paquet (100) comprenant :
- un signal d'identification (106) pour l'identification d'au moins un récepteur du groupe de récepteurs d'appel sélectif;
- une information de message (110); et
- un signal de commande (108) séparé et suivant le signal d'identification (106), le signal d'identification (106) et le signal de commande (108) représentant un second masque indiquant une seconde période de réception;
- l'accumulation (320, 324) d'une pluralité de messages;
- la détermination de la transmission d'au moins un paquet additionnel pouvant contenir une information de message envoyée vers au moins le groupe de récepteurs d'appel sélectif pour valider au moins le groupe de récepteurs d'appel sélectif pour la réception d'au moins un paquet additionnel;
- la génération (326) du signal de commande possédant le second masque indiquant la seconde période de réception en réponse à ladite détermination;
- l'incorporation (330) du signal de commande dans le paquet possédant un signal d'identification correspondant à un signal d'identification prédéterminé assigné à au moins un récepteur du groupe de récepteurs d'appel sélectif; et
- la transmission (332) du paquet.

10. Procédé selon la revendication 9, selon lequel le signal de commande correspond au nombre de périodes des paquets générés, de façon périodique, entre le paquet possédant un signal d'identification correspondant à un signal d'identification prédéterminé assigné au premier groupe de récepteurs d'appel sélectif et l'apparition d'un paquet suivant possédant, de façon potentielle, une information de message pour le premier groupe de récepteurs d'appel sélectif.
